# FASCICULE DE BREVET EUROPEEN

(11) **EP 0 935 418 B1**
(45) Date de publication et mention de la délivrance du brevet: **12.12.2001**
(21) Numéro de dépôt: 97944938.6
(22) Date de dépôt: 07.10.1997
(51) Int. Cl.: A22B 5/00

(54) **PROCEDE, DISPOSITIF ET INSTALLATION D'ARRACHAGE DE PANNES**
VERFAHREN, VORRICHTUNG UND ANLAGE ZUM ABTRENNEN VON FETTSTREIFEN
METHOD, DEVICE AND INSTALLATION FOR PULLING OUT FAT

(30) Priorité: 07.10.1996 FR 9612401
(43) Date de publication de la demande: 18.08.1999
(73) Titulaire: DURAND INTERNATIONAL, 07210 Baix (FR)
(72) Inventeur: VAN HOREEBECK, Jean, F-07200 Aubenas (FR)
(74) Mandataire: Derambure, Christian
(86) Numéro de dépôt international: FR9701790
(87) Numéro de publication internationale: WO9815186

(56) Documents cités:
- EP-A- 0 245 183
- EP-A- 0 706 761

## Description

L'invention concerne l'arrachage d'amas de graisse en forme de couche situé sous la peau du corps d'un animal abattu, ouvert et éviscéré.

Elle s'applique plus spécialement aux pannes de porcs.

Le document EP-A-245 183 révèle un procédé pour arracher les pannes d'un porc abattu, qui consiste à :
- suspendre par les pattes arrière un porc abattu et éviscéré,
- introduire, dans la cage thoracique ouverte du porc, une pince comportant des mâchoires à mors actifs orientés vers l'extérieur,
- placer les mors actifs sensiblement dans le plan des extrémités inférieures des pannes tapissant les faces internes des flancs du porc,
- ouvrir la pince pour appliquer les mors actifs contre les extrémités inférieures des pannes,
- presser, contre la face externe des flancs du porc, des contre-mors passifs en regard des mors actifs,
- ouvrir les contre-mors passifs,
- fermer la pince pour rapprocher les mors actifs et arracher les extrémités inférieures de pannes saisies par les moyens de préhension,
- élever la pince pour décoller les pannes des faces internes des flancs du porc,
et extraire la pince du porc.

Une machine correspondante comprend :
- une structure porteuse déplaçable verticalement par un moteur sur des glissières de support et de guidage d'un bâti,
- un châssis porté par la structure, déplaçable horizontalement par un moteur et formant un pivot vertical,
- et une pince à deux branches montée sur le pivot et comportant :
   * deux mâchoires saillant par rapport au châssis et possédant dans leurs faces extérieures des mors actifs ou moyens de préhension rétractables ;
   * des moyens de commande en ouverture-fermeture des branches de la pince et en extension-rétraction des moyens de préhension,
   * deux contre-mors passifs montés pivotants sur les branches, sensiblement dans le plan horizontal des mors actifs pour être en outre situés extérieurement à ces derniers,
   * et des moyens de commande en course d'ouverture-fermeture relative des contre-mors par rapport aux mors.

Selon le document EP-A-245 183, les mors sont pourvus de griffes ou de dents acérées.

Selon le document FR-A-2 627 353, un procédé et une machine connus tels qu'ils viennent d'être décrits sont tels qu'on définit automatiquement le plan des extrémités inférieures des pannes.

Selon le document EP-A-706 761, la technique qui vient d'être décrite a de nombreux inconvénients. Ce document révèle en conséquence un dispositif comprenant des moyens de saisie de la panne prenant la forme de moyens de succion et des moyens pour tirer sur la panne prenant la forme d'un mandrin d'enroulement entraîné en rotation.

L'invention se réfère à la technique de saisie par pincement et non par succion. En effet, la première citée apparaît plus efficace que la seconde.

L'invention a cependant pour but de perfectionner la technique de saisie par pincement antérieurement connue :
- afin d'éviter d'entamer localement la viande sous-jacente à la panne lors de la saisie initiale de celle-ci ;
- afin d'être adaptée au cas de pannes plus minces qu'auparavant ;
- afin d'éviter des mors de pincement trop agressifs ;
- afin de permettre une polyvalence de mise en oeuvre, notamment pouvoir être appliquée aussi bien à des bêtes dont le corps est entier, fendu ou non, ou seulement à une partie de bête ;
- afin de répondre aux exigences actuelles d'hygiène, efficacité et sécurité.

A cet effet, et selon un premier aspect, l'invention concerne un procédé pour arracher au moins un morceau d'un amas de graisse en forme de couche situé sous la peau du corps -ou partie de corps- d'un animal abattu, ouvert et éviscéré, plus spécialement la panne d'un porc, dans lequel, successivement :
- on amène au moins un dispositif de saisie comprennant des moyens mécaniques de pincement à être appliqué sur une partie terminale initiale de la panne à arracher ;
- on actionne les moyens de pincement en vue de serrer les mors qu'ils comprennent et conséquemment saisir mécaniquement la panne dans sa partie terminale initiale ;
- on réalise un déplacement relatif du corps de l'animal et des moyens de pincement selon une direction générale et un sens tels que les moyens de pincement défilent au regard de la panne en s'écartant de la partie terminale initiale, et conséquemment on tire sur la panne et on l'arrache progressivement du corps de l'animal.

Ce procédé est tel que :
- on applique localement à la panne une pression différentielle d'air, avant que de serrer les mors, en vue de conformer la panne de manière telle que les mors la saisissent de façon ferme et appropriée ; et
- avec les mors, on assure un pincement positif efficace de la panne là où elle a été préalablement conformée grâce à l'aspiration.

On entend par conformation le fait que la panne est déformée par rapport à son état originel. Cette déformation vise à positionner convenablement la panne déformée entre les mors. C'est grâce à ce positionnement convenable que la saisie ultérieure de la panne par les mors une fois serrés est assurée d'être ferme, sans possibilité de dissociation intempestive, et appropriée, en vue de l'étape de tirage - et donc d'arrachage- ultérieure.

Selon une autre caractéristique du procédé, on aspire la panne du côté où elle se trouve et on la saisit mécaniquement dans une même zone.

L'application du dispositif de saisie sur la panne dont il est question n'implique pas nécessairement l'exercice d'une pression substantielle, ni même un contact effectif. Il suffit que le dispositif de saisie soit placé par rapport à la panne de manière que l'aspiration réalisée assure la conformation souhaitée.

On peut assurer un pincement de la panne sans entamer ni la panne, ni la viande sous-jacente.

On commande le début, respectivement la fin, de l'aspiration en fonction de l'application du dispositif de saisie sur la panne, du serrage des mors, notamment la saisie effective de la panne.

Les mors sont en position d'ouverture lorsque le dispositif de saisie est appliqué sur la panne et on commande le début de l'aspiration sensiblement au plus tard lorsqu'on commence à fermer les mors en vue de leur serrage sur la panne.

Selon une réalisation, on commande la fin de l'aspiration une fois les mors fermés ou serrés sur la panne, notamment simultanément ou quasi simultanément avec cette fermeture ou ce serrage. Dans ce cas, les moyens d'aspiration ne participent pas à la saisie de la panne pendant son arrachage, cette saisie étant assurée par les moyens de pincement.

Selon une autre réalisation, on commande l'aspiration pour la maintenir effective une fois les mors serrés, contrairement à la réalisation qui précède. Toutefois, comme précédemment, les moyens d'aspiration ne participent pas à la saisie de la panne pendant son arrachage, cette saisie étant assurée par les moyens de pincement.

Enfin, selon une autre réalisation, on commande l'aspiration pour la maintenir effective une fois les mors serrés, comme dans la réalisation qui vient d'être décrite. Dans cette réalisation, les moyens d'aspiration peuvent apporter une certaine contribution à la saisie de la panne pendant son arrachage, cette saisie étant toutefois assurée essentiellement par les moyens de pincement.

Quelle que soit la réalisation considérée, la fonction première et primordiale de l'aspiration est de permettre une saisie ultérieure efficace de la panne par les moyens de pincement, mais non de réaliser effectivement cette saisie, cela étant du ressort des moyens de pincement.

On conforme la panne pour l'incurver à convexité convenable tournée vers les moyens de pincement et ce, dans une zone essentiellement limitée à celle où se trouvent ces moyens de pincement. La puissance des moyens d'aspiration, et donc de l'aspiration elle-même, est telle que la conformation de la panne soit substantielle. La saisie par les moyens de pincement est ainsi assurée d'être ferme et appropriée.

Selon une réalisation, on procède au nettoyage du dispositif de saisie -plus spécialement des moyens d'aspiration et de pincement- à un moment où le dispositif est écarté de la panne à arracher, respectivement du corps de l'animal. A cet effet, on utilise un liquide de nettoyage. Les moyens de nettoyage mis en oeuvre à cette fin sont pour partie communs avec les moyens d'aspiration. Toutefois, on procède au nettoyage à un moment où on a cessé l'aspiration. A cet effet, on envoie un liquide de nettoyage via les moyens d'aspiration inactifs à cette dernière fin jusqu'aux moyens de pincement et alentours. On récupère ensuite le liquide de nettoyage usé.

Le nettoyage ainsi considéré peut intervenir avant et/ou après le traitement d'un corps ou partie de corps.

L'intégration du nettoyage, tel qu'il vient d'être mentionné, permet de répondre aux exigences actuelles d'hygiène et d'efficacité.

Etant donné sa conception, le procédé peut ne pas comporter d'étape consistant à agir indirectement, mécaniquement et localement sur la panne -à l'opposé d'elle- notamment au moyen d'un contre-mors de manière à la conformer localement en vue de sa saisie par les moyens de pincement. Une telle étape susceptible de n'être pas prévue est celle décrite dans le document EP-A-245 183.

Selon une variante, on réalise le déplacement relatif du corps de l'animal et des moyens de pincement jusqu'à ce que toute la panne à arracher, de sa partie initiale à sa partie terminale finale y comprise, soit arrachée. On poursuit alors ce déplacement tout en maintenant la panne saisie par les moyens de pincement, jusqu'à l'écarter totalement du corps de l'animal. Puis on actionne les moyens de pincement pour ouvrir les mors et libérer la panne. Dans ce cas, la panne est totalement dissociée du corps de l'animal et écartée de lui. Cette variante permet de traiter séparément, respectivement, le corps de l'animal dépourvu de panne et la panne.

Selon une autre variante, on réalise le déplacement relatif en question jusqu'à ce que toute la panne soit arrachée, à l'exception toutefois de sa partie finale, laquelle reste associée au corps de l'animal. La panne étant ainsi arrachée, on actionne ensuite les moyens de pincement pour ouvrir les mors et libérer la panne. Puis on écarte le dispositif de saisie du corps de l'animal. Dans ce cas, la panne reste associée au corps de l'animal dans sa partie finale tout en étant arrachée de lui ailleurs.

Cette variante permet de garder à l'ensemble corps/panne une certaine intégrité -ces deux parties n'étant pas totalement dissociées- tout en, simultanément, facilitant l'arrachage ultérieur complet -indispensable- de la panne.

Selon une réalisation, on détecte l'emplacement de la partie initiale et/ou de la partie finale de la panne et on commande conséquemment l'application du dispositif de saisie sur la panne, respectivement l'actionnement des moyens de pincement pour serrer ou ouvrir les mors, ainsi que le déplacement relatif du corps de l'animal et des moyens de pincement.

Une telle détection permet une automatisation permettant de répondre aux exigences actuelles d'efficacité et de sécurité.

Selon une réalisation, on suspend le corps de l'animal, l'emplacement de la tête en bas et celui des pattes de derrière en haut, de manière que la partie terminale initiale de la panne soit inférieure et la partie terminale finale supérieure. On réalise un déplacement relatif du corps de l'animal et des moyens de pincement selon une direction générale verticale et un sens ascendant.

Selon les cas, on met en oeuvre un corps d'animal entier, avec ou sans tête, non fendu du côté de la colonne vertébrale ; ou un corps entier, avec ou sans tête, mais fendu du côté de la colonne vertébrale, une étape préalable de fente étant alors prévue ; ou une partie seulement du corps de l'animal, plus spécialement une moitié ou demi-carcasse, une étape préalable de fente ou découpe étant alors également prévue.

Ces différentes variantes illustrent la polyvalence de mise en oeuvre du procédé selon l'invention.

Selon une réalisation, on traite simultanément ou quasi simultanément les deux morceaux de panne du corps de l'animal. A cet effet, on met en oeuvre un ensemble de saisie comportant deux dispositifs de saisie -un pour chaque morceau de panne-. On introduit cet ensemble dans la cage thoracique ouverte de l'animal alors que les deux dispositifs sont en position rapprochée. On écarte ensuite mutuellement les deux dispositifs de saisie pour les appliquer sur les deux partie de panne respectifs.

Une telle réalisation, outre son excellente adaptation au cas d'un corps d'animal entier, permet d'avoir une bonne symétrie de forces appliquées au corps, ce qui est avantageux.

Lorsque, plus spécialement, le corps de l'animal soit n'est pas entier, soit est fendu, il est préférable d'assurer un maintien d'ensemble de celui-ci à l'encontre de la poussée d'ensemble du dispositif de saisie, a fortiori des dispositifs lorsqu'il y en a plusieurs. On utilise à cette fin des moyens de maintien appropriés.

Selon une réalisation, le procédé comporte également une étape finale dans laquelle, selon les cas, on pèse le corps de l'animal dépourvu de panne, respectivement la panne enlevée ; ou bien le corps de l'animal comprenant la panne levée mais associée à lui.

Selon les cas, soit on maintient substantiellement stationnaire le corps de l'animal pendant l'arrachage, le procédé étant à poste fixe soit, au contraire, on déplace le corps de l'animal, le procédé pouvant alors être à poste mobile.

Pour appliquer le dispositif de saisie sur la panne et tirer sur cette dernière pour l'arracher, on déplace le dispositif de saisie comprenant les moyens de pincement. Ce déplacement est essentiellement un mouvement de translation.

Selon une réalisation typique, le procédé selon l'invention comporte les étapes successives suivantes :
- amenée du corps ou partie de corps d'un animal dont la panne à arracher est apparente ;
- détection de l'emplacement de la partie initiale de panne à arracher ;
- application sur cette partie initiale des mors à l'état ouvert ;
- aspiration locale de la panne dans la partie initiale et déformation de la panne vers l'intérieur des mors ;
- fermeture des mors sur la panne ainsi déformée ; pincement positif efficace de la panne par suite de sa saisie ferme et appropriée ; simultanément au serrage des mors, arrêt de l'aspiration ou d'une aspiration efficace ;
- mouvement de translation des mors serrés, le long de la panne, pour l'arracher progressivement du corps de l'animal, totalement ou seulement partiellement à l'exception de la partie finale ;
- nettoyage par le liquide approprié, une fois les mors écartés du corps de l'animal et dégagés de la panne.

Selon un deuxième aspect, l'invention concerne un dispositif de saisie d'un amas de graisse en forme de couche situé sous la peau du corps -ou partie de corps-d'un animal abattu, ouvert et éviscéré, plus spécialement la panne d'un porc, destiné notamment à faire partie d'une installation d'arrachage de panne, comportant :
- un boîtier délimitant un logement interne ayant une fenêtre ouverte dans une paroi destinée à venir être appliquée contre la panne à arracher au sens où cela a été précédemment explicité ;
- des moyens mécaniques de pincement sous forme de mors, placés dans le logement et engagés dans la fenêtre ;
- des moyens d'actionnement des moyens de pincement en vue d'ouvrir et de fermer, ou serrer, les mors, respectivement les bloquer serrés.

Ce dispositif comporte, en outre, des moyens d'aspiration locale de la panne, combinés aux moyens de pincement, aptes à conformer la panne de manière telle que les mors la saisissent de façon ferme et appropriée ; ainsi que des moyens de commande du fonctionnement des moyens d'aspiration. Les mors assurent un pincement positif efficace de la panne là où elle a été préalablement conformée grâce aux moyens d'aspiration.

Les moyens d'aspiration comprennent la fenêtre, une partie au moins du logement interne attenant à celle-ci et permettant une incurvation de la panne vers l'intérieur du boîtier, entre les mors et, enfin, un passage approprié. L'ensemble est apte à être en communication avec des moyens pour créer une dépression d'air tels qu'une pompe à vide. La fenêtre forme une zone où intervient d'une part l'aspiration, d'autre part le pincement.

Les moyens de commande des moyens d'aspiration sont associés à l'application du boîtier sur la panne mors ouverts et/ou au serrage des mors, respectivement aux moyens de commande ou de détection de cette application et/ou serrage. Ces moyens de commande sont tels notamment qu'on débute l'aspiration sensiblement au plus tard lorsqu'on commence à fermer les mors en vue de leur serrage sur la panne.

Selon une réalisation, les moyens de commande sont tels qu'on termine l'aspiration une fois les mors fermés ou serrés sur la panne. Les moyens d'aspiration ne participent pas à la saisie de la panne pendant son arrachage, cette saisie étant assurée par les moyens de pincement.

Selon une autre réalisation, les moyens de commande sont tels qu'on maintient l'aspiration effective une fois les mors serrés. Comme précédemment, les moyens d'aspiration ne participent toutefois pas à la saisie de la panne pendant son arrachage, cette saisie étant assurée par les moyens de pincement.

Eventuellement, les moyens de commande sont tels qu'on maintient l'aspiration effective une fois les mors serrés. Toutefois, la saisie est assurée essentiellement par les moyens de pincement.

Le boîtier, les mors, la fenêtre et le logement ont une forme générale allongée et profilée le long d'une direction principale. Dans une réalisation d'installation, cette direction principale est horizontale ou sensiblement horizontale.

Il est prévu pour chaque dispositif de saisie un mors fixe faisant partie du boîtier et un mors mobile logé dans le boîtier.

Dans une réalisation, le mors fixe est constitué par une forme profilée renflée donnée au boîtier le long d'un bord longitudinal de la fenêtre.

Dans une réalisation, le mors mobile est constitué par une pièce profilée ayant une partie en pointe - notamment tronquée- vers la fenêtre, et une partie renflée écartée de la fenêtre et susceptible d'être fixée à une pièce support, mobile. Cette dernière se présente sous la forme générale d'un axe ou tourillon s'étendant parallèlement à la direction principale précédemment mentionnée, monté à pivotement dans deux paliers d'extrémité. Cette pièce -axe ou tourillon- est écartée de la paroi latérale du boîtier, notamment placée en partie médiane du boîtier.

Dans la réalisation considérée, l'extrémité libre distale (extérieure) du mors mobile est sensiblement confondue avec la fenêtre. En tout cas, elle ne saille pas substantiellement du boîtier.

Les bords longitudinaux de la fenêtre, le mors fixe et le mors mobile ont des formes profilées telles que :
- en position d'ouverture des mors, le mors mobile vient contre le chant du boîtier attenant au bord longitudinal de la fenêtre opposé au mors fixe. Les deux mors sont alors écartés pour ménager entre eux une voie de passage pour l'air d'aspiration ;
- en position de fermeture des mors, le mors mobile vient contre le mors fixe par deux surfaces d'appui respectives. En position de fermeture au moins partielle, un bord de la partie renflée du mors mobile vient contre le chant du boîtier précédemment mentionné afin de fermer, à cet endroit, la voie de passage pour l'air d'aspiration.

Les mors du dispositif de saisie sont dépourvus de griffes ou de dents acérées et conséquemment assurent une saisie de la panne par pincement, sans entamer ni la panne, ni la viande sous-jacente.

La grande face extérieure de la paroi du boîtier où se trouve la fenêtre -destinée à être appliquée sur la panne- a une forme profilée incurvée à concavité tournée vers l'intérieur du boîtier, au moins à l'endroit de la fenètre.

Les moyens d'actionnement des moyens de pincement comprennent un arbre moteur porté par et logé dans le bottier, écarté de sa paroi latérale, s'étendant parallèlement au mors mobile et écarté de lui, ainsi que des organes de transmission tels que des pignons dentés en prise mutuelle, interposés entre l'arbre moteur et ledit axe ou tourillon.

Dans une réalisation, le boîtier -de forme générale parallèlépipédique- est solidaire et prolongé le long de la direction principale considérée par un carter fermé, dans lequel est logé ledit arbre moteur, sur lequel sont montés des moyens d'entraînement dudit arbre. Dans la paroi du carter est ménagée une ouverture apte à être en communication avec les moyens pour créer une dépression d'air.

Selon une réalisation, le carter est monté à pivotement avec blocage par rapport à une enveloppe support. Les moyens d'aspiration comprennent sur l'enveloppe une ouverture d'amenée principale. L'ouverture d'amenée principale est apte à être en communication avec les moyens pour créer une dépression d'air. Des moyens d'entraînement permettent le pivotement relatif et le blocage en pivotement du carter et du boîtier qui lui est associé rigidement, par rapport à l'enveloppe, notamment sur une fraction de tour telle qu'un quart ou un huitième de tour. Ce pivotement, autour d'un axe qui, dans une réalisation de l'installation, est disposé horizontalement et transversalement -ou sensiblement transversalement-permet un positionnement optimal du boîtier donc des mors par rapport à la panne.

Selon une réalisation, le dispositif comporte également des moyens de nettoyage, plus spécialement du logement du boîtier et des mors. Ces moyens de nettoyage sont pour partie communs avec les moyens d'aspiration. Ils comportent en outre des moyens d'amenée d'un liquide de nettoyage notamment sous pression. Il est prévu également des moyens de récupération du liquide de nettoyage usé.

Selon une réalisation, le dispositif comporte en outre, une canne d'amenée de l'air d'aspiration et, le cas échéant, du liquide de nettoyage notamment sous pression. Cette canne forme un support pour deux circuits pour respectivement l'air d'aspiration et le liquide de nettoyage. Ces deux circuits sont terminés par deux ouvertures. La canne et l'enveloppe peuvent être déplacées de façon relative l'une par rapport à l'autre avec blocage, de manière que l'ouverture appropriée de la canne vienne en correspondance et en communication avec l'ouverture d'amenée principale unique de l'enveloppe.

Cette disposition constructive permet d'utiliser, dans le boîtier et le carter, un seul circuit pour l'air d'aspiration et le liquide de nettoyage. Le fluide approprié circule dans ce circuit en fonction de l'ouverture de la canne qui est utilisée.

Il est prévu, généralement, des moyens d'entraînement avec blocage de la canne et de l'ensemble boîtier-carter. Ces moyens d'entraînement sont commandés par des moyens de commande pouvant être couplés à ceux des moyens d'aspiration et/ou de nettoyage. Ces moyens d'entraînement pouvent être les mêmes que ceux de l'ensemble boîtier-carter. Dans ce cas, la canne reste fixe et l'ensemble boîtier-carter est mobile. Cette disposition constructive permet de tirer partie de la course de l'ensemble boîtier-carter pour le positionner convenablement au regard de l'aspiration ou du nettoyage.

Un dispositif de saisie de panne tel qu'il vient d'être décrit doit, pour pouvoir assurer l'arrachage d'une panne, être déplacé, une fois la panne saisie, dans le sens où la panne est arrachée du corps de l'animal auquel elle est originellement associée. Ce déplacement est assuré par l'intégration du dispositif dans une installation d'arrachage de panne. Dans une autre réalisation, le dispositif de saisie est déplacé manuellement.

Selon un troisième aspect, l'invention concerne une installation pour arracher au moins un morceau d'un amas de graisse en forme de couche situé sous la peau du corps -ou partie de corps- d'un animal abattu, ouvert et éviscéré, plus spécialement la panne d'un porc, caractérisée en ce qu'elle comporte au moins un dispositif de saisie tel qu'il vient d'être décrit, un tel dispositif de saisie étant supporté par l'intermédiaire de l'enveloppe sur un second chariot porté lui-même par un premier chariot monté sur un bâti. L'installation comprend en outre des moyens d'entraînement du premier et du second chariots et des moyens support -plus spécialement de suspension verticale-du corps de l'animal à traiter. Les moyens constitutifs de l'installation sont agencés d'une manière telle que le dispositif de saisie puisse être appliqué sur la panne à arracher dans une partie terminale initiale et être ensuite déplacé, une fois la panne saisie, vers sa partie finale pour assurer l'arrachage progressif de la panne.

L'application du dispositif de saisie doit s'entendre ainsi qu'il a été précédemment explicité.

cette application est faite à partir d'une position escamotée où le dispositif de saisie ne gêne pas l'amenée du corps de l'animal à traiter, respectivement son évacuation ultérieure.

La saisie par les mors est réalisée en mettant en oeuvre l'aspiration précédemment décrite.

Une telle installation permet la mise en oeuvre industrielle du procédé précédemment décrit et l'utilisation optimale du dispositif de saisie également décrit.

Selon une réalisation, l'installation est telle que le bâti s'étend verticalement, le premier chariot étant à mouvement vertical ascendant et descendant, le second chariot étant à mouvement horizontal ou sensiblement horizontal. Le dispositif de saisie est monté par l'enveloppe sur le second chariot à pivotement avec blocage autour d'un axe vertical et entre l'enveloppe et le carter à pivotement avec blocage autour d'un axe horizontal.

Le pivotement autour de l'axe vertical peut être limité à une fraction de tour.

Au lieu de la structure à chariots qui vient d'être décrite, l'installation peut avoir une autre structure apte à assurer les mouvements nécessaires du dispositif de saisie.

L'installation a l'avantage de pouvoir être dépourvue de contre mors tels que ceux qui agissent sur la panne depuis l'extérieur avec pour but de conformer localement la panne pour sa saisie par les moyens de pincement.

L'installation peut comporter également des moyens de détection de l'emplacement de la partie initiale et/ou finale de la panne à arracher. Elle peut comporter, outre les moyens support du corps ou partie de corps de l'animal à traiter, des moyens de maintien d'ensemble du corps ou partie du corps à l'encontre de la poussée du dispositif de saisie. Cette disposition constructive est bien adaptée au cas du corps d'un animal qui, soit n'est pas entier, soit est fendu. L'installation peut comporter des moyens de pesée. Une telle installation est soit à poste fixe, soit à poste mobile.

Selon une réalisation particulière, l'installation comporte deux dispositifs de saisie positionnés dos à dos l'un par rapport à l'autre de manière que leurs fenêtres soient dirigées vers l'extérieur, à l'opposé l'une de l'autre. Cette installation est spécialement destinée à l'arrachage des deux morceaux d'une panne situés de part et d'autre de l'ouverture thoracico-abdominale du corps de l'animal.

Dans ce cas, les deux dispositifs de saisie sont situés à proximité l'un de l'autre dans un même plan horizontal. Ils sont disposés au moins sensiblement symétriquement l'un par rapport à l'autre par rapport à un plan vertical transversal.

Les deux dispositifs de saisie sont entraînés en synchronisme, respectivement bloqués en rotation, autour de leurs axes de pivotement verticaux respectifs, la course de pivotement étant de l'ordre d'une fraction de tour entre une position rapprochée où l'ensemble des deux dispositifs de saisie peut pénétrer dans l'ouverture thoracico-abdominale du corps de l'animal à traiter et une position écartée où les deux dispositifs de saisie viennent contre les deux morceaux de panne à arracher.

D'autres caractéristiques ressortent de la description faite ci-dessous en référence aux dessins annexés.

La figure 1 est une vue schématique en élévation par rapport à un plan vertical médian transversal montrant de côté une installation selon l'invention permettant la mise en oeuvre du procédé et incorporant deux dispositifs de saisie.

Les figures 2 à 9 illustrent différentes étapes de phases successives de mise en oeuvre du procédé. Les figures 2 à 7 sont des vues en coupe par un plan horizontal selon la ligne II-II de la figure 1. Les figures 8 et 9 sont des vues similaires à la figure 1.

La figure 10 est une vue partielle, à plus grande échelle, selon un plan horizontal et la ligne II-II de la figure 1 illustrant le dispositif de saisie en phase d'aspiration, la panne n'étant pas représentée.

La figure 11 est une vue similaire à la figure 10 illustrant le dispositif en phase de nettoyage.

La figure 12 est une vue en élévation latérale du dispositif de saisie selon un plan vertical médian et la ligne XII-XII de la figure 10.

Les figures 13 à 15 sont trois vues en coupe transversale, respectivement, selon les lignes XIII-XIII, XIV-XIV et XV-XV de la figure 12.

La figure 16 est une vue similaire à la figure 13 mais à plus grande échelle et avec représentation partielle de la panne illustrant l'aspiration de la panne avant sa saisie par les mors en position d'ouverture.

La figure 17 est une vue analogue à la figure 16 illustrant le moment où l'aspiration a cessé, la saisie mécanique et positive de la panne par les mors étant effective, les mors étant en position de fermeture partielle.

La figure 18 est une vue analogue à la figure 16, illustrant les mors totale en position de fermeture, la panne étant absente et non représentée.

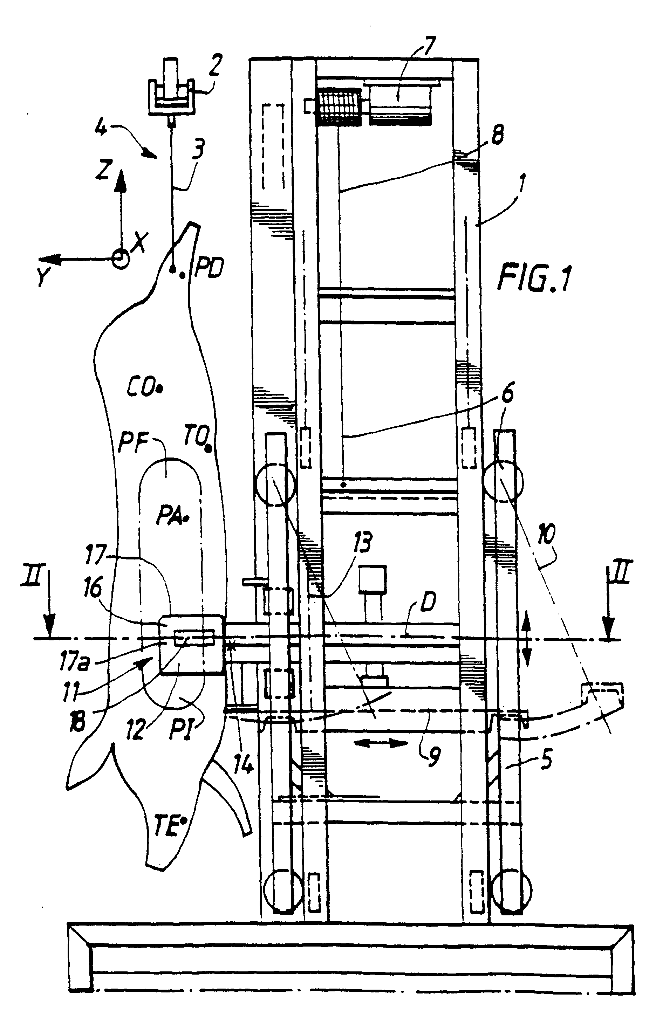

Une installation selon la réalisation de la figure 1 comprend un bâti 1 s'étendant verticalement, de position fixe. A côté et à proximité de la partie extrême supérieure du bâti 1 se trouve un convoyeur 2, mobile à défilement horizontal (perpendiculairement au plan de la figure 1 dénommé par la suite plan transversal principal), tel qu'un chariot mobile à galets roulant sur une piste de guidage. Cette piste de guidage définit une direction horizontale X laquelle permet de définir une autre direction horizontale perpendiculaire Y. Les directions X et Y définissent avec la direction verticale Z le référentiel directionnel de l'installation et du procédé.

Au convoyeur 2 est associé un organe de suspension 3, disposé généralement verticalement, agencé pour supporter le corps CO d'un animal abattu, ouvert et éviscéré.

Le convoyeur 2 est commandé de manière que le corps CO de l'animal puisse être amené devant le bâti 1, qu'il reste stationnaire devant le bâti 1 pendant l'opération d'arrachage de panne, et, enfin, qu'il puisse être ensuite évacué.

Dans cette réalisation, l'animal considéré est un porc. Il est ouvert verticalement du côté de la cage thoracique tournée vers le bâti 1, et présente ainsi une ouverture thoracico-abdominale OT. La panne PA à arracher est alors en deux morceaux distincts PA1 et PA2, situés de part et d'autre de l'ouverture TO, vers l'intérieur de la cage thoracique.

La panne PA est attenante à une couche de gras GR, elle-même attenante à la poitrine PO.

Le corps CO de l'animal n'est pas fendu du côté de la colonne vertébrale opposée à l'ouverture TO. Il est suspendu à l'organe de suspension 3 par les pattes de derrière PD, la tête TE étant dirigée vers le sol.

Le convoyeur 2 et l'organe de suspension 3 forment des moyens support 4 du corps CO de l'animal dont la panne PA doit être arrachée.

Ces moyens support 4 ainsi que le bâti 1 peuvent faire l'objet d'autres modes de réalisation.

Ainsi, au lieu de former un poste d'arrachage d'emplacement fixe, ils peuvent former un poste mobile, le corps CO de l'animal étant traité lors de son déplacement ou défilement horizontal dans la direction X.

Au lieu que le bâti 1 soit fixe et les moyens support 4 mobiles, ce peut être l'inverse : bâti 1 mobile, moyens support 4 fixes.

Au lieu de traiter un corps CO d'animal entier (tête associée ou déjointée), on peut traiter une partie de corps. Par exemple sans la tête. Ou une demi-carcasse. Dans ce cas, il est prévu une étape préalable de fente ou découpe.

Au lieu de traiter un corps CO non fendu du côté de la colonne vertébrale, on peut avoir prévu une telle fente.

Lorsque l'on traite un corps Co d'animal ayant une cage thoracique entière, il est possible de tirer parti de la symétrie du corps CO -et donc des forces appliquées lors de l'arrachage - pour éviter un maintien d'ensemble de l'animal dans un plan horizontal autre que le maintien découlant de la suspension par les moyens 4.

Lorsque le corps CO de l'animal n'est pas entier ou est fendu vers la colonne vertébrale, cette symétrie d'application des forces disparaît ou il n'y a pas, en contrepartie, une cohésion suffisante du corps CO. Dans de tels cas, on peut prévoir un maintien d'ensemble du corps CO dans un plan horizontal. Ce maintien peut être assuré par exemple par une sorte de flasque incurvé de manière à épouser le contour du corps CO. Ce flasque est porté par le bâti 1 ou autrement. Il est fixe ou escamotable. Il maintient le corps CO en tout emplacement convenable, par exemple vers la tête TE, ou en partie médiane au niveau de la panne PA.

Bien qu'il soit usuel de suspendre le corps CO d'un animal par les pattes de derrière PD, on peut envisager la variante dans laquelle le corps CO est placé différemment : suspendu autrement ou disposé horizontalement.

Dans la mesure où le corps CO est suspendu verticalement, les deux morceaux de panne, en regard l'un de l'autre, s'étendent chacun en une sorte de bande présentant une certaine épaisseur, cette bande s'allongeant le long d'une direction verticale.

Le bâti 1 supporte un premier chariot 5 s'étendant verticalement, monté coulissant verticalement, vers le haut et le bas, avec blocage possible en position.

Le premier chariot 5 est porté et entraîné, respectivement bloqué, à coulissement ascendant, descendant, par des moyens support et d'entraînement 6.

Ces moyens 6 comprennent ici un moto-réducteur-frein 7 placé en haut du bâti 1, sur le tambour duquel est enroulé un câble 8 relié au chariot 5.

Le premier chariot 5 et les moyens 6 peuvent faire l'objet d'autres modes de réalisation.

Ainsi, et s'agissant des moyens 6, au lieu d'un moto-réducteur-frein 7 et câble 8, on peut prévoir un moteur en prise sur une crémaillère ou une chaîne sans fin motorisée.

Le premier chariot 5 supporte un second chariot 9 s'étendant généralement horizontalement dans la direction Y, notamment vers l'ouverture thoracico-abdominale TO.

Le bâti 1 et le premier chariot 5 sont creux de manière à permettre le passage et le mouvement du second chariot 9, lors des mouvements.

Le second chariot 9 est monté sur le premier chariot 5 de manière à pouvoir se trouver et être maintenu dans deux positions extrêmes, respectivement avancée et escamotée en arrière.

La position avancée permet la mise en oeuvre du procédé d'arrachage lorsque les dispositifs de saisie sur lesquels on reviendra par la suite sont actifs.

La position escamotée en arrière permet de dégager le passage pour le corps CO lors de son arrivée ou son évacuation.

Ces positions avancée et escamotée sont illustrées sur la figure 1 respectivement en traits pleins et en traits mixtes.

Le second chariot 9 est porté et entraîné entre ses deux positions extrêmes par des moyens support et d'entraînement 10 aptes à assurer le blocage en position voulue.

Ces moyens 10 comprennent ici un système pendulaire motorisé. Cependant, ils peuvent faire l'objet d'autres modes de réalisation tels que glissières, vérins, crémaillères, etc. convenablement disposés.

Plus généralement, le bâti 1, les chariots 5, 9 et les moyens connexes 6 et 10 peuvent être réalisés différemment de ce qui vient d'être décrit afin que, dans le cadre de l'installation considérée, le second chariot 9 puisse être déplacé tant verticalement vers le haut et le bas, qu'horizontalement dans la direction Y.

Le second chariot 9 supporte et est prolongé horizontalement dans la direction Y vers le convoyeur 2 et le corps CO par un ensemble 11 de saisie des deux morceaux de panne PA1, PA2 à arracher.

Cet ensemble 11 comporte deux dispositifs de saisie 12, un pour chaque morceau de panne PA1, PA2.

L'ensemble 11, respectivement les dispositifs de saisie 12, une fois déplacés de façon relative ainsi qu'il est décrit par la suite peuvent assurer non seulement la saisie de la panne, mais aussi son arrachage.

Selon une autre réalisation, l'installation est destinée à arracher une seule partie de panne au lieu de deux. Elle comporte alors un seul dispositif de saisie 12.

Les deux dispositifs de saisie 12 sont montés sur le second chariot 9 de manière à pouvoir pivoter chacun autour d'un axe vertical 13, avec blocage.

Chaque dispositif 12 est déplacé à rotation autour de son axe 13, respectivement bloqué, grâce à des moyens d'entraînement tels qu'un vérin pneumatique.

La course de rotation de chaque dispositif 12 autour de l'axe 13 est de l'ordre d'une fraction de tour, notamment de moitié de tour.

Les deux dispositifs 12 sont disposés symétriquement ou sensiblement symétriquement par rapport au plan transversal principal. Ils sont positionnés dos à dos. Les deux dispositifs 12 sont situés à proximité l'un de l'autre, dans un même plan horizontal et le long d'une direction générale parallèle à la direction X.

Les deux dispositifs 12 sont déplacés en synchronisme ou sensiblement en synchronisme, pour rester symétriques ou sensiblement symétriques et éviter ainsi le déplacement ou le balancement intempestif du corps CO par suite d'une dissymétrie des forces appliquées par les dispositifs de saisie 12.

Cette disposition constructive permet -lorsque le corps CO est entier et non fendu- de se dispenser de l'obligation de prévoir des moyens de maintien d'ensemble du corps dans un plan horizontal, autres que les moyens support 4.

Lorsque, au contraire, le corps CO, bien qu'entier, est fendu, a fortiori lorsqu'on traite une partie seulement du corps CO, il est préférable de prévoir de tels moyens de maintien (tels que le flasque incurvé précédemment mentionné).

Chaque dispositif de saisie 12 est également monté sur le second chariot 9 -en l'occurrence indirectement- de manière à pouvoir pivoter sur une certaine course autour d'un axe horizontal 14, avec blocage. Lorsque les deux dispositifs 12 sont rapprochés l'un de l'autre, l'axe 14 est disposé parallèlement à la direction X. La course de pivotement autour de l'axe 14 est de l'ordre d'une fraction de tour, notamment de moitié, voire de quart de tour.

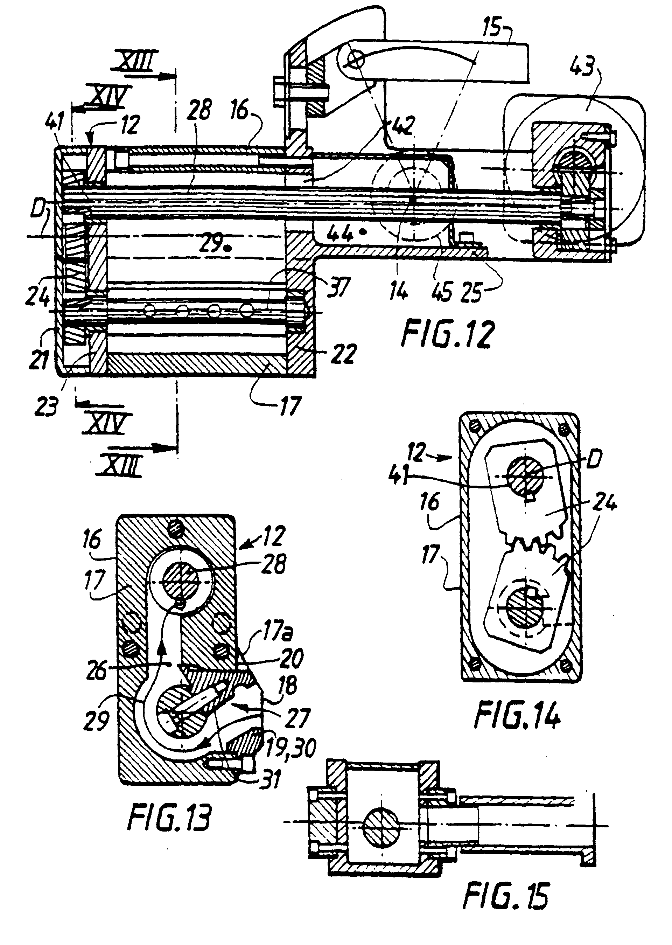

Le déplacement, respectivement le blocage, de chaque dispositif 12 autour de l'axe 14 est assuré grâce à des moyens d'entraînement tels qu'un vérin pneumatique dont la tige 15 est visible sur la figure 12.

La structure portante des dispositifs 12 sur le second chariot 9 peut se présenter sous la forme de ciseaux dont les deux parties sont décalées en hauteur. Cette structure peut être conçue pour permettre un effet de levier ou de démultiplication de force ou de course ; ou, encore, une cinématique de déplacement adaptée aux besoins.

La structure portante des dispositifs de saisie 12 et les moyens d'entraînement, respectivement de blocage, associés peuvent faire l'objet d'autres formes de réalisation, d'agencement, de montage.

Dans tous les cas, il importe de faire en sorte que les dispositifs de saisie 12 puissent être déplacés de façon relative par rapport au corps CO. Ce dernier étant en l'occurrence fixe pendant l'arrachage de la panne PA, il convient de pouvoir déplacer effectivement les dispositifs de saisie 12 eux-mêmes, de façon appropriée à la géométrie du corps CO considéré et à la cinématique qui en découle.

Ce déplacement est d'une part un déplacement d'ensemble des deux dispositifs de saisie 12 et, d'autre part, un déplacement de chacun d'eux par rapport à l'autre.

Chaque dispositif de saisie 12 comporte un boîtier 16, rigide et creux. Le boîtier 16 est de forme générale parallélépipédique. Il s'étend le long d'une direction principale D placée sensiblement horizontalement -au pivotement autour de l'axe 14 près- parallèlement à la direction Y.

Le boîtier 16 comporte une paroi latérale périphérique 17, sur une grande face 17a de laquelle est ménagée une fenêtre ouverte 18, permettant d'accéder à l'intérieur du boîtier 16 depuis l'extérieur et réciproquement.

Cette grande face 17a, et plus précisément la fenêtre 18, est destinée à être appliquée contre la panne PA à arracher.

Il est entendu que l'application dont il est ici question est soit un contact avec pression, soit un contact ou même un simple "quasi contact" sans réelle application avec pression, soit même une localisation à proximité immédiate afin que l'aspiration subséquente réalisée permette néanmoins d'assurer la conformation souhaitée.

Dans la réalisation où chaque morceau de panne est en forme générale de bande de direction verticale, la grande face 17a et la fenêtre 18 sont destinées à être disposées généralement verticalement transversalement par rapport à cette bande. C'est-à-dire que la direction D s'étend dans la largeur de la bande.

Les deux dispositifs de saisie 12 sont positionnés l'un par rapport à l'autre de manière que leurs fenêtres 18 soient dirigées vers l'extérieur de l'ensemble 11, c'est-à-dire à l'opposé l'une de l'autre.

La fenêtre 18 de contour général rectangulaire, de longueur horizontale importante par rapport à la largeur verticale, est limitée par un premier et un second bords horizontaux et longitudinaux 19, 20, respectivement inférieur et supérieur sur la représentation des figures 13, 16 à 18.

La grande face extérieure 17a a, dans la réalisation représentée, une forme profilée à concavité tournée vers l'intérieur du boîtier 16, au moins à l'endroit de la fenêtre 18. Cette concavité permet d'épouser le bord libre du mors mobile 31.

Outre la paroi 17, le boîtier 16 comporte deux flasques d'extrémité respectivement extérieur 21 et intérieur 22, disposés transversalement par rapport à la direction D.

Le flasque extérieur 21 est le plus éloigné du second chariot 9. Il est monté de manière amovible afin de pouvoir accéder à une petite chambre attenante ménagée dans le boîtier 16, transversalement à la direction D. Cette chambre est limitée vers l'intérieur par une paroi transversale 23. Elle permet le logement et la protection d'organes de transmission 24 sur lesquels on revient par la suite.

Le flasque intérieur 22 est le plus proche du chariot 9. Il est associé rigidement et solidairement à un carter fermé 25 prolongeant le boîtier 16 vers l'intérieur de l'installation, dans la direction D, vers les chariots 5 et 9 et du bâti 1.

Il est entendu que le boîtier 16 peut faire l'objet d'autres réalisations équivalentes à celle qui vient d'être décrite. Par exemple en étant formé de deux moitiés associées l'une à l'autre.

Le boîtier 16 creux délimite un logement interne 26 débouchant dans la fenêtre 18.

Chaque dispositif de saisie 12 comporte également des moyens mécaniques 27 de pincement de la panne PA sur laquelle et à l'endroit de laquelle il est appliqué. Ces moyens de pincement 27 sont portés par le boîtier 16, placés dans le logement 26 et engagés dans la fenêtre 18.

Il est prévu des moyens d'actionnement avec blocage 28 des moyens de pincement 27.

Chaque dispositif de saisie 12 comporte en outre des moyens d'aspiration locale 29 de la panne PA. Ainsi que des moyens de commande associés.

Les moyens mécaniques de pincement 27 comportent ici un mors fixe 30 et un mors mobile 31.

Comme le boîtier 16, donc la fenêtre 18 et le logement 26, les mors 30, 31 ont une forme profilée le long de la direction D.

Le mors fixe 30 fait partie du boîtier 16 et est constitué ici par le bord 19 de la fenêtre 18, également de forme profilée renflée.

Dans la réalisation représentée, ce bord 19 est rapporté sur le boîtier 16. Il présente une surface intérieure d'appui 32 limitant le logement 26 et une surface extérieure d'appui 33 située dans la grande face 17a. Ces deux surfaces 32, 33 sont, à leur jonction, sensiblement perpendiculaires entre elles.

Le mors mobile 31 est constitué par une pièce profilée ayant d'une part une partie en pointe 34, active pour le pincement, dont l'extrémité libre distale 35, tronquée, est sensiblement confondue avec la fenêtre 18, et d'autre part, une partie renflée de maintien 36, écartée de la fenêtre 18, située sensiblement dans la portion médiane du boîtier 16 et de son logement 26.

Le mors mobile 31 est fixé par la partie renflée 36 à une pièce support 37, mobile à pivotement autour d'un axe parallèle à la direction D. Cette fixation est assurée au moyen de vis 38.

Le mors mobile 31 présente deux surfaces d'appui respectivement intérieure 39 et extérieure 40, de part et d'autre de l'extrémité libre distale 35. Ces deux surfaces 39, 40 font entre elles un angle de l'ordre d'une vingtaine de degrés.

La surface formant la pointe tronquée 35 est sensiblement perpendiculaire à la surface d'appui intérieure 39.

Les deux surfaces d'appui 32, pour le mors fixe 30, 39 pour le mors mobile 31, sont placées en regard l'une de l'autre. Leur espacement -lorsque les mors sont en position d'ouverture- permet la communication avec le logement 26, autorise la conformation convexe vers l'intérieur de la panne PA, et, enfin, permet le débattement nécessaire du mors mobile pour le serrage de la panne PA ou la fermeture complète des mors.

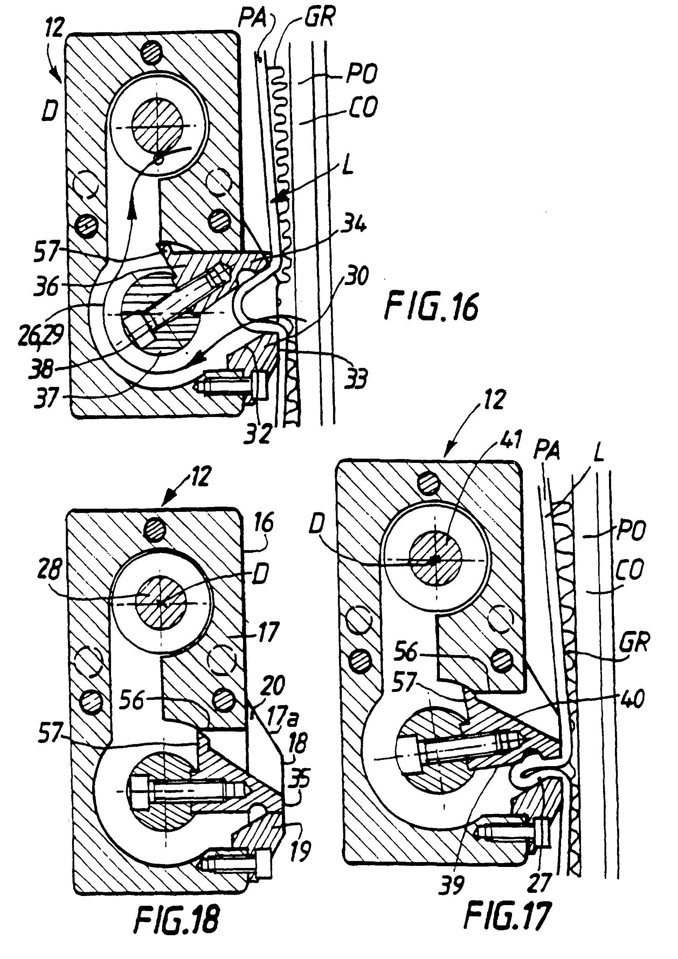

La surface d'appui 32 présente une forme de dièdre avec une partie externe et une partie interne. La surface d'appui 39 est plane avec ici une rainure longitudinale. La partie externe de la surface d'appui 32 et la surface d'appui 39 viennent l'une contre l'autre lorsque les mors 30, 31 sont totalement fermés. Lorsque les mors 30, 31 sont totalement ouverts pour recevoir une panne PA aspirée, la partie externe forme une sorte d'évasement favorisant la conformation de la panne PA. Lorsque les mors 30, 31 sont serrés sur la panne PA, leur écartement est comme il est représenté à la figure 17 avec un écartement minimal à l'endroit de l'arête entre les deux parties externe et interne.

Les mors 30, 31 s'étendent entre la paroi 23 et le flasque intérieur 22, le long de la direction D.

Les mors 30, 31 ont, dans la réalisation considérée, une surface lisse et continue. Ils sont dépourvus de griffes, de dents, de pointes, de découpes ou équivalent.

Par suite, ils ne sont pas aussi agressifs que les mors classiquement utilisés pour la même application.

La pièce support mobile 37 s'étend au-delà de la paroi 23, vers le flasque extérieur 21 afin de permettre le montage des organes de transmission 24. Cette pièce 37 se présente sous la forme d'un axe ou tourillon monté dans deux paliers d'extrémité, respectivement sur la paroi 23 et le flasque intérieur 22.

La pièce 37 laisse libre autour d'elle une partie du logement 26. Celui-ci n'est pas occulté par la pièce 37, écartée de la paroi du boîtier 16.

Les moyens d'actionnement 28 du mors mobile 31, c'est-à-dire des moyens de pincement 27, comprennent un arbre moteur 41 porté par le boîtier 16 dans un palier de la paroi 23 et, à l'opposé, dans un palier du carter 25.

L'arbre 41 est parallèle à la direction D, donc au mors mobile 31. Il en est écarté, bien que placé en regard.

Les organes de transmission 24 sont ici des pignons dentés en prise mutuelle, respectivement calés sur l'arbre 41 et l'axe ou tourillon 37 et donc interposés entre eux.

Les moyens de pincement 27 et les moyens d'actionnement associés 28 peuvent faire l'objet de variantes de réalisation. Par exemple, il peut être prévu deux mors mobiles au lieu d'un mors fixe et d'un mors mobile.

Le carter 25, également creux, est en communication avec le boîtier 16 proprement dit -c'est-à-dire le logement 26- par une ouverture 42 du flasque 21, traversée par l'arbre 41 mais suffisamment grande pour laisser un passage autour.

Des moyens d'entraînement 43 de l'arbre 41 sont montés sur et à l'extérieur du carter 25. Il s'agit, ici d'un moteur réversible associé à un renvoi d'angle.

Les moyens d'entraînement 43 peuvent faire l'objet d'autres formes de réalisation. Il peut s'agir par exemple d'un vérin.

Dans tous les cas, les moyens d'entraînement 43 sont conçus et agencés pour permettre le pivotement de l'arbre moteur 41 et donc du mors mobile 31, dans un sens ou dans l'autre sur une certaine course limitée par les positions d'ouverture et de fermeture. Cette course est, ici, de l'ordre de 35°.

L'arbre 41 associé cinématiquement aux moyens d'entraînement 43 est situé du côté opposé au mors fixe 30. Cette structure permet, notamment, de dégager la zone des mors 30, 31, celle-ci devant être appliquée sur la panne.

Le logement interne 26 permet un passage continu depuis la fenêtre 18 jusqu'à l'ouverture 42 en passant entre les mors 30, 31 et en contournant la pièce 37 et l'arbre 41.

Ce passage permet un flux d'air d'aspiration, respectivement de liquide de nettoyage lorsque la réalisation comporte des moyens et une phase de nettoyage.

Les moyens d'aspiration 29 comprennent la fenêtre 18 ; une partie au moins du logement 26, à savoir la partie restant libre car non occupée par le mors mobile 31, la pièce 37, l'arbre 41 convenablement écartés de la paroi latérale 17 du boîtier 16 ; et, enfin, un passage 44 ménagé dans le carter 25. Cet ensemble de passages est en communication mutuelle, notamment via l'ouverture 42. Cet ensemble est fermé, à l'exception d'un côté de la fenêtre 18 et de l'autre côté d'une ouverture 45 ménagée latéralement dans la paroi du carter 25. Cette ouverture 45 est ici située écartée des moyens d'entraînement 43, mais du même côté du carter 25.

L'ensemble formé par le boîtier 16 incluant notamment les moyens de pincement 27 et la fenêtre 18 et le carter 25 supportant les moyens d'entraînement 434 et pourvu de l'ouverture latérale 45 est monté sur une enveloppe support 46. Cette enveloppe support 46 est portée par le second chariot 9 de manière à pouvoir pivoter, respectivement être bloquée, autour de l'axe vertical 13.

L'enveloppe support 46 forme une sorte de chape 47 recevant le carter 25 de manière pivotante, mais bloquable, autour de l'axe 14, grâce aux moyens d'entraînement incluant la tige 15 d'un vérin fixé sur l'enveloppe 46.

Selon une réalisation, le pivotement autour de l'axe 14 est réalisé à l'endroit d'un joint tournant associé à l'ouverture latérale 45. Ce pivotement est de l'ordre d'une fraction de tour. Il vise à permettre une adaptation optimale du dispositif 12 à la géométrie de l'animal dont la panne doit être arrachée.

L'ouverture latérale 45 et celle correspondante de l'enveloppe 45 sont elles-mêmes en communication, notamment via un conduit 48 interne de l'enveloppe 46 -s'étendant le long de la direction X- avec une ouverture d'amenée principale 49.

Cette ouverture 49, ménagée dans l'enveloppe 46, est coaxiale avec l'ouverture 45, mais écartée d'elle.

Cette disposition constructive permet de dégager la fenêtre 18 pour les raisons précédemment exposées.

L'ouverture d'amenée principale 49 est en communication de façon appropriée avec les moyens pour créer une dépression d'air.

Selon une autre réalisation, il n'y a pas de joint tournant associé à l'ouverture mais un tube d'axe 14 solidaire du carter 25 à l'endroit de l'ouverture 45, ce tube traversant l'enveloppe 46 jusqu'à son bord opposé pour former l'ouverture 49.

Le circuit de l'air d'aspiration est donc complexe. Depuis la fenêtre 18, il passe entre les deux mors 30, 31 en se dirigeant vers le bas ; il contourne la pièce 37 et se dirige vers le haut autour de l'arbre 41 ; il se dirige dans le sens de la direction D pour passer du boîtier 16 au carter 25 via l'ouverture 42 et sort du carter latéralement par l'ouverture 45 ; il traverse ensuite l'enveloppe 46 pour finalement en sortir par l'ouverture 49.

Lorsque les mors 30, 31 sont ouverts, la fenêtre 18 l'est également entre les deux mors. Lorsque les mors 30, 31 sont fermés, la fenêtre 18 l'est également et ce, grâce au mors mobile 31 occulant la fenêtre. Le circuit d'air d'aspiration est alors occulté. Enfin, en position de fermeture partielle des mors 30, 31, le circuit d'air reste ouvert, par la fenêtre 18, entre les deux mors 30, 31.

Dans une réalisation, il est prévu également des moyens de nettoyage du dispositif 12 et plus spécialement du logement 26 -notamment vers les mors 30, 31- ainsi que les mors 30, 31 eux-mêmes.

Ces moyens de nettoyage sont pour partie communs avec les moyens d'aspiration 28 précédemment décrits.

Ils comprennent en effet le circuit allant de la fenêtre 18 à l'ouverture 49.

Ce circuit n'est alors pas destiné au passage de l'air d'aspiration -celle-ci ayant cessé à ce moment-, les moyens d'aspiration 29 ayant été commandés en conséquence, mais au passage, dans le sens opposé, d'un liquide de nettoyage sous pression.

Il est alors prévu des moyens d'amenée d'un tel liquide de nettoyage.

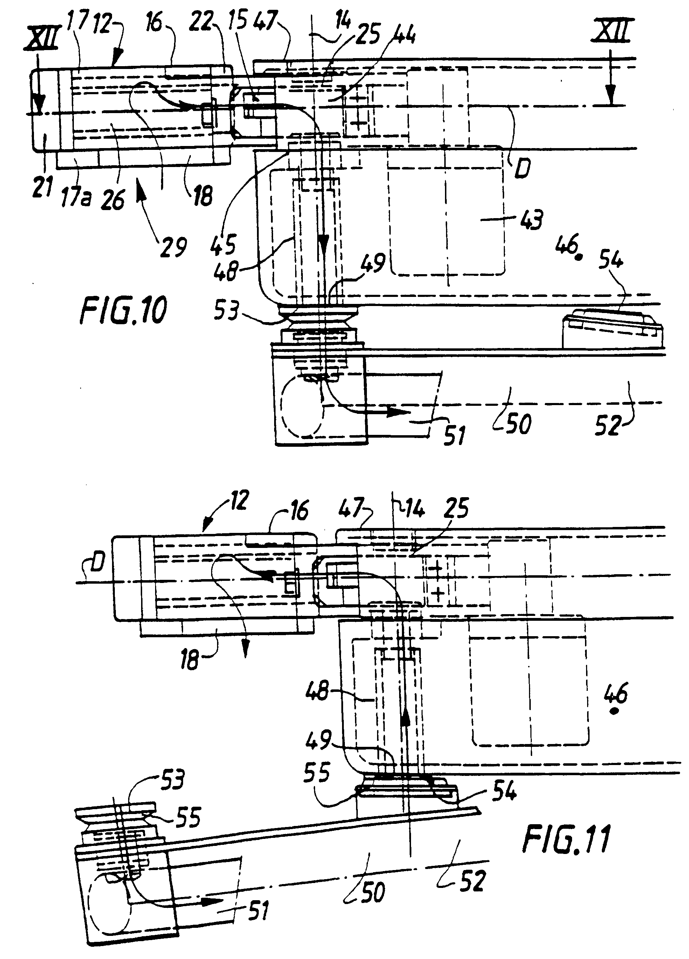

La figure 10 illustre le sens du cheminement de l'air d'aspiration, alors que la figure 11 illustre le sens de cheminement opposé du liquide de nettoyage sous pression.

Le liquide de nettoyage visé sort de la fenêtre 18. Dans cette situation, les mors 30, 31 ne sont pas totalement fermés.

Il est également prévu des moyens de récupération du liquide de nettoyage usé. A cette fin, il peut être prévu que, lors du nettoyage, les dispositifs de saisie 12 sont en position escamotée et placés dans une enceinte permettant la récupération, en fond, du liquide usé.

Selon une autre réalisation, au lieu de liquide de nettoyage, on utilise un gaz.

Il est prévu, dans la réalisation considérée, une canne 50 dont la direction générale est parallèle à la direction D. Cette canne 50 forme un support et permet d'assurer, selon les cas, l'amenée de l'air d'aspiration ou du liquide de nettoyage sous pression.

Cette canne 50 supporte deux circuits distincts 51, 52 pour respectivement l'air d'aspiration et le liquide de nettoyage.

Ces deux circuits 51, 52 sont associés respectivement à des sources appropriées en vide et en liquide sous pression, pouvant être éloignées des dispositifs 12.

La canne 50 comporte également, sur un même côté, deux ouvertures 53, 54 terminant respectivement les circuits 51, 52.

Les ouvertures 53, 54 sont écartées l'une de l'autre le long de la canne 50 mais situées par trop éloignées l'une de l'autre.

A chaque ouverture 53, 54 est associée un joint approprié tel que 55 permettant d'assurer une étanchéité suffisante avec l'enveloppe 46 autour de l'ouverture 49.

La canne 50 et l'enveloppe 46 peuvent être déplacées de façon relative l'une par rapport à l'autre de manière que l'ouverture appropriée 53, 54 de la canne 50 vienne en correspondance et en communication avec l'ouverture d'amenée de l'enveloppe 46.

En particulier, ce déplacement relatif est assuré par un mouvement général de translation de la canne 50 dans la direction D.

Les moyens d'entraînement du déplacement relatif, notamment du déplacement de la canne 50, peuvent être, par exemple, un vérin.

La commande de ces moyens est couplée à celle des moyens d'aspiration et de nettoyage.

Selon une autre réalisation, les moyens d'entraînement considérés sont les mêmes que ceux de l'ensemble boîtier-carter. Dans ce cas, la canne 50 reste fixe.

On se réfère maintenant plus spécialement aux figures 16 à 18.

Sur la figure 16, les mors 30, 31 sont en position d'ouverture.

Dans ce cas, le mors mobile 31 est en position extrême de butée, appliqué par sa surface 40 contre le chant 56 du boîtier 16 attenant au bord 20. Les deux mors 30, 31 sont écartés l'un de l'autre et ménagent entre eux une voie de passage à l'air d'aspiration et un creux suffisamment profond pour permettre l'incurvation de la panne vers l'intérieur du boîtier 16. Lorsque les moyens d'aspiration 29 sont actionnés, l'air d'aspiration sortant par la fenêtre 18 réalise cette conformation de la panne PA, celle-ci formant un pli non écrasé.

Sur la figure 17, les mors 30, 31 sont serrés sur la panne PA placée entre eux. Par rapport à la situation de la figure 16, le mors mobile 31 a été pivoté d'une fraction de tour par exemple de l'ordre d'une quinzaine de degrés. Les mors 30, 31, maintenus serrés par les moyens d'actionnement 28, assurent un pincement positif de la panne pliée là où elle a été préalablement conformée par les moyens d'aspiration 29.

Par suite de la conformation de la panne PA résultant de son aspiration, la saisie par les mors 30, 31 est assurée de manière ferme et efficace.

On entend par là qu'une longueur suffisante de panne est prise par les mors 30, 31 ; que la panne est bien positionnée entre les mors 30, 31 ; et que, au moment de la saisie ultérieure, la panne ne s'échappe pas des mors 30, 31 de façon intempestive.

Il en résulte que le pincement positif ultérieur de la panne PA par les mors 30, 31 est lui-même efficace.

La fenêtre 18 est donc une zone où intervient d'une part l'aspiration et d'autre part le pincement.

L'espace libre entre les mors 30, 31 permet non seulement le débattement nécessaire à leur ouverture et à leur fermeture, mais aussi l'aspiration d'air.

En conséquence, les moyens d'aspiration 29 sont combinés aux moyens de pincement 27.

Sur la figure 18, les mors 30, 31 sont totalement fermés et appliqués l'un contre l'autre, en l'absence entre eux de toute panne PA.

Dans ce cas, les deux surfaces d'appui intérieures 32, 39 viennent l'une contre l'autre.

D'autre part, le mors mobile 31 présente dans sa partie renflée 36, à l'opposé de la surface d'appui intérieure 39, donc vers la surface d'appui extérieure 40, un bord 57 venant contre le chant du boîtier 16 attenant au bord 20. Cette disposition constructive permet alors de fermer à cet endroit la fenêtre 18 et le passage de l'air d'aspiration (ou de liquide de nettoyage).

Plus précisément, le chant du boîtier 16 attenant au bord 20 est incurvé par rapport à l'axe de pivotement du mors mobile 31 de manière que le bord 57 soit contre le chant quelle que soit la position ouverte ou fermée (totalement ou partiellement) des mors 30, 31. De cette manière, l'air d'aspiration, respectivement le liquide de nettoyage, est dirigé exclusivement entre les deux mors 30, 31 là où cela est utile.

La forme incurvée de la grande face 17a où se trouve la fenêtre 18, est en correspondance avec l'extrémité distale 35, le mors 31 ne saillant pas du boîtier 16. Alors même que les mors 30, 31 assurent une saisie efficace de la panne, ils ne sont pas agressifs. La raison est que la panne est essentiellement pincée et non entamée par les mors. Il n'est donc pas nécessaire de prévoir des mors pourvu de griffes ou de dents acérées.

Les moyens d'aspiration 29 comprennent également une source d'air sous faible pression pour assurer l'aspiration voulue. Et les moyens de nettoyage une source de liquide de nettoyage et d'air sous pression.

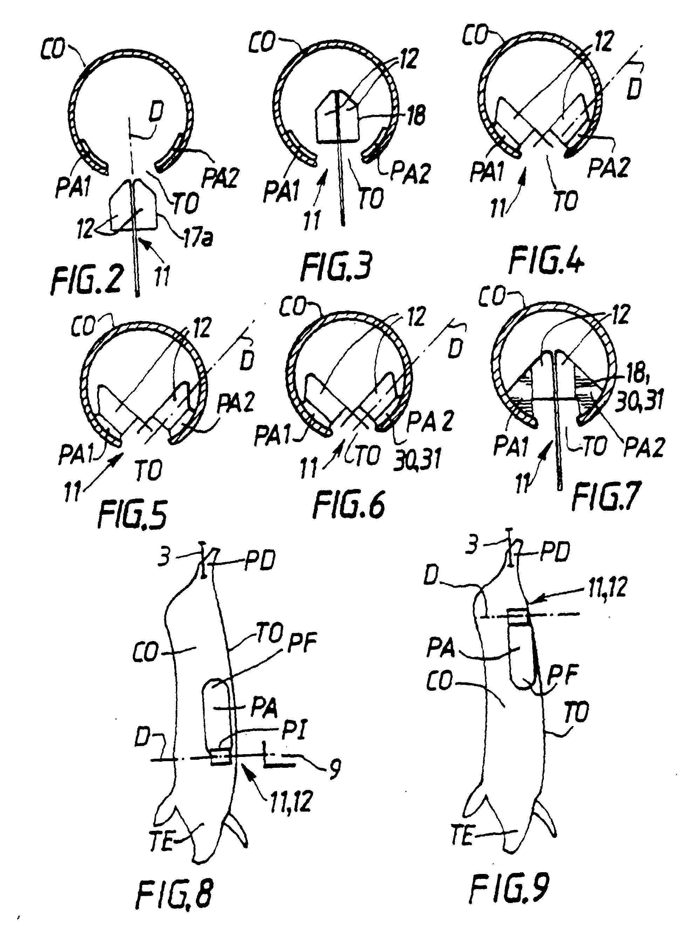

On décrit maintenant le procédé de mise en oeuvre de l'installation à deux dispositifs de saisie 12 qui vient d'être décrite, en se référant aux figures 2 à 9 ainsi que 16 et 17.

On part d'une situation où le corps CO de l'animal abattu dont la panne en deux morceaux PA1, PA2 doit être arrachée à été préalablement ouvert du côté de la cage thoracique pour présenter l'ouverture thoracico-abdominale TO.

Le corps Co est suspendu, l'ouverture TO en regard du bâti 1 du côté de l'ensemble 11 et des deux dispositifs 12.

A ce moment, l'ensemble de saisie 11 est en position rétractée de manière à permettre l'amenée du corps CO. Les deux dispositifs 12 étant rapprochés l'un de l'autre, ainsi qu'il est représenté en figure 2.

Dans la réalisation considérée, l'ensemble 11 est alors au niveau de la partie initiale PI, en l'occurrence inférieure, de la panne PA1, PA2.

Cette partie PI, respectivement ce niveau, peut être détecté ou calculé grâce aux moyens prévus à cet effet. L'amenée de l'ensemble 11 au niveau convenable est assurée par le coulissement approprié du premier chariot 5 et les moyens d'entraînement 6 associés.

A ce moment, les mors 30, 31 sont inactifs. Selon les réalisations constructives, ils sont soit ouverts, ce qui correspond à la situation ultérieurement nécessaire, soit fermés pour protéger le logement interne 26.

Les moyens d'aspiration sont également inactifs au regard de la panne considérée et, le cas échéant, ils peuvent être commandés afin d'être arrêtés.

L'étape ultérieure consiste à déplacer l'ensemble 11, les dispositifs de saisie 12 restant en position rapprochée, de l'extérieur vers l'intérieur de la cage thoracique via l'ouverture TO.

Lors de ce déplacement, l'ensemble 11 reste sensiblement au même niveau horizontal.

Ce déplacement de l'ensemble 11 résulte du déplacement du second chariot 9 grâce aux moyens 10. Le cas échéant, on prévoit que le second chariot 9 est monté coulissant entre les deux positions indiquées et qu'il supporte un autre chariot monté coulissant sur lui, de la même manière, pour le coulissement de faible amplitude.

Le déplacement à travers l'ouverture TO est rendu possible par le fait que l'ensemble 11 est d'encombrement faible en direction horizontale parallèlement à la direction X.

La figure 3 illustre la situation lorsque l'ensemble 11 est dans la cage thoracique.

L'étape ultérieure consiste à écarter l'un de l'autre en synchronisme les deux dispositifs 12 par pivotement autour de leurs axes verticaux 13 jusqu'à les amener à être appliqués, au sens défini précédemment, sur les deux parties initiales PI de panne à arracher.

Ce sont les fenêtres 18 dès dispositifs de saisie 12 qui sont appliquées sur la panne PA.

Ce pivotement est assuré par les moyens d'entraînement prévus à cette fin.

Le cas échéant, chaque boîtier 16 est incliné par rapport à l'horizontale par pivotement autour de l'axe 14, grâce aux moyens d'entraînement comprenant la tige de vérin 15.

La figure 4 illustre la situation lorsque l'application des dispositifs saisie 12 sur la panne est réalisée.

On se réfère maintenant aux figures 5 et 16.

Les mors 30, 31 sont ouverts, pour autant qu'ils ne l'étaient pas déjà antérieurement.

On commande l'aspiration grâce à la mise en oeuvre des moyens d'aspiration 29. Plus précisément, le début de l'aspiration est commandée au plus tard lorsqu'on commence à fermer les mors 30, 31.

On ferme progressivement les mors 30, 31 par pivotement du mors mobile 31 vers le mors fixe 30, et ce grâce aux moyens d'actionnement 28.

On commande la fin de l'aspiration en fonction du serrage des mors 30, 31 emprisonnant alors la panne PA.

La saisie efficace de la panne PA par les moyens de pincement 27 peut être obtenue sans avoir recours à la mise en oeuvre de contre-mors mécaniques, indirects et extérieurs.

Les figures 6 et 17 illustrent la situation dans laquelle, après ce qui vient d'être décrit, les mors 30, 31 emprisonnent fermement la panne.

On peut alors commander la fin de l'aspiration.

En effet, dans la réalisation considérée ici, l'aspiration ne participe pas à la saisie proprement dite de la panne PA. Cette saisie est assurée par les moyens de pincement 27.

On fait alors de nouveau pivoter en synchronisme les deux dispositifs de saisie 12 autour de leurs axes verticaux 13 dans des sens opposés aux sens précédents jusqu'à ramener les deux dispositifs 12 en position rapprochée.

Ce pivotement a pour effet d'écarter chaque dispositif de saisie 12 du corps CO de l'animai à traiter. Ce faisant, chaque dispositif de saisie 12 tire sur la partie correspondante de panne, dans la partie initiale inférieure PI, ce qui la décolle du corps CO à cet endroit.

Il n'y a ici aucun risque que la panne PA se désengage intempestivement des mors 30, 31, même si elle adhère fortement au corps CO et si les mors 30, 31 sont dépourvus de griffes ou de dents acérées, étant donné que l'étape antérieure d'aspiration et la conformation consécutive ont permis aux moyens le pincement 27 de saisir efficacement la panne.

La figure 7 représente la situation à ce moment. Elle correspond également aux figures 1 et 8. Elle est illustrée également par la figure 17.

Bien que l'ensemble de saisie 11 ne soit pas en contact direct avec le corps CO, mais seulement avec la partie initiale inférieure PI de la panne arrachée, le corps CO est, dans son ensemble, convenablement maintenu compte tenu de la symétrie de l'installation, et donc des forces appliquées.

Le procédé peut faire l'objet de variantes.

Ainsi, on pourrait concevoir que, à partir de la situation de la figure 6, les deux dispositifs ne soient pas rapprochés, comme représenté à la figure 7, ou ne soient rapprochées que partiellement.

L'avantage du rapprochement complet, comme il a été décrit plus haut, est de dégager l'ensemble 11 de la cage thoracique, pour l'étape ultérieure.

Cette étape consiste, en l'occurrence, le corps restant stationnaire, à élever l'ensemble 11 et ce, grâce au premier chariot 5 et aux moyens 6 associés.

Cette translation verticale ascendante du dispositif 11 a pour effet de tirer sur la panne dans le sens de son arrachement du corps CO.

Ce mouvement est poursuivi jusqu'à ce que la panne soit arrachée jusqu'à sa partie finale supérieure PF.

La figure 9 illustre cette situation.

Le procédé peut faire l'objet de différentes variantes selon que la panne PA est totalement arrachée et écartée du corps CO ou maintenue associée à lui à l'endroit de la partie PF.

Dans la réalisation considérée, le mors fixe 30 est en position inférieure et le mors fixe 31 en position supérieure.

Par la suite, l'ensemble 11 est écarté du corps CO et rétracté.

Le corps CO peut être évacué.

Les moyens de nettoyage peuvent être mis en oeuvre.

Et un nouveau cycle recommencer.

## Revendications

1. Procédé, pour arracher au moins une partie (PA 1, PA 2) de la panne (PA) d'un animal abattu, ouvert et éviscéré, dans lequel, successivement :
- on amène au moins un dispositif de saisie (12) comprenant des moyens mécaniques de pincement (27) à être appliqué sur une partie terminale initiale de la panne à arracher ;
- on actionne les moyens de pincement en vue de serrer les mors (30,31) qu'ils comprennent et conséquemment saisir mécaniquement la panne dans sa partie terminale initiale;
- on réalise un déplacement relatif du corps (CO) de l'animal et des moyens de pincement (27) selon une direction générale et un sens tels que les moyens de pincement (27) défilent au regard de la panne en s'écartant de la partie terminale initiale, et conséquemment on tire sur la panne et on l'arrache ainsi progressivement du corps de l'animal,
**caractérisé, en ce que** :
- on applique localement à la panne une pression différentielle d'air, avant que de serrer les mors (30,31), en vue de conformer la panne de manière telle que les mors la saisissent de manière ferme et appropriée ; et
- avec les mors, on assure un pincement positif efficace de la panne là où elle a été préalablement conformée grâce à l'aspiration.

2. Procédé selon la revendication 1, **caractérisé en ce que**, pour appliquer à la panne une pression différentielle d'air apte à la conformer, on l'aspire du côté où elle se trouve grâce à des moyens d'aspiration (29); et **en ce qu'**on aspire et on saisit mécaniquement la panne dans une même zone.

3. Procédé selon l'une des revendications 1 ou 2, **caractérisé en ce qu'**on assure un pincement de la panne pliée sans entamer ni la panne, ni la viande sous-jacente.

4. Procédé selon l'une des revendications 1 à 3, **caractérisé, en ce qu'**on commande le début de l'aspiration en fonction de l'application du dispositif de saisie (12) sur la panne ; et/ou la fin de l'aspiration en fonction du serrage des mors (30,31), notamment la saisie effective de la panne.

5. Procédé selon l'une des revendications 1 à 4, **caractérisé en ce que** les mors sont en position d'ouverture lorsque le dispositif de saisie est appliqué sur la panne; et on commande le début de l'aspiration sensiblement au plus tard lorsqu'on commence à fermer les mors (30,31) en vue de leur serrage sur la panne.

6. Procédé selon l'une des revendications 1 à 5, **caractérisé en ce que** soit on commande la fin de l'aspiration une fois les mors (30,31) fermés ou serrés sur la panne, soit on la maintient effective une fois les mors serrés, les moyens d'aspiration (29) ne participant pas à la saisie de la panne pendant son arrachage, cette saisie étant assurée par les moyens de pincement.

7. Procédé selon l'une des revendications 1 à 5, **caractérisé en ce qu'**on commande l'aspiration pour la maintenir effective une fois les mors serrés, les moyens d'aspiration pouvant apporter une certaine contribution à la saisie de la panne pendant son arrachage, cette saisie étant toutefois assurée essentiellement par les moyens de pincement (27).

8. Procédé selon l'une des revendications 1 à 7, **caractérisé en ce qu'**on conforme la panne pour l'incurver à convexité convenable tournée vers les moyens de pincement (27), dans une zone essentiellement limitée à celle où se trouvent ces moyens de pincement et avec une puissance telle que la conformation de la panne soit substantielle; la saisie par les moyens de pincement étant ainsi assurée d'être ferme et appropriée.

9. Procédé selon l'une des revendications 1 à 8, **caractérisé en ce qu'**on procède au nettoyage du dispositif de saisie (12) - plus spécialement des moyens d'aspiration et de pincement - à un moment où on a écarté le dispositif de la panne à arracher, respectivement du corps de l'animal; on utilise des moyens de nettoyage mettant en oeuvre un liquide de nettoyage, pour partie communs avec les moyens d'aspiration; on réalise le nettoyage à un moment où on a cessé l'aspiration.

10. Procédé selon la revendication 9, **caractérisé en ce qu'**on assure le nettoyage du dispositif de saisie en envoyant un liquide de nettoyage via les moyens d'aspiration alors inactifs jusqu'aux moyens de pincement et alentours ; et on récupère ensuite le liquide de nettoyage usé.

11. Procédé selon l'une des revendications 1 à 10, **caractérisé en ce qu'**il ne comporte pas d'étape consistant à agir indirectement mécaniquement et localement sur la panne - à l'opposé d'elle, notamment au moyen d'un contre-mors.

12. Procédé selon l'une des revendications 1 à 11, **caractérisé, en ce qu'**on réalise le déplacement relatif du corps (CO) de l'animal et des moyens de pincement jusqu'à ce que toute la panne (PA) à arracher, de sa partie initiale à sa partie finale y comprise, soit arrachée; on poursuit alors ce déplacement tout en maintenant la panne saisie par les moyens de pincement (27), jusqu'à l'écarter totalement du corps de l'animal; puis on actionne les moyens de pincement pour ouvrir les mors (30,31) et libérer la panne (PA).

13. Procédé selon l'une des revendications 1 à 11, **caractérisé en ce qu'**on réalise le déplacement relatif du corps de l'animal et des moyens de pincement jusqu'à ce que toute la panne soit arrachée, à l'exception toutefois de sa partie finale, laquelle reste associée au corps de l'animal; on actionne ensuite les moyens de pincement pour ouvrir les mors et libérer la panne; puis on écarte le dispositif de saisie du corps de l'animal, la panne arrachée restant associée au corps dans sa partie finale.

14. Procédé selon l'une des revendications 1 à 13, **caractérisé en ce qu'**on détecte l'emplacement de la partie initiale et/ou de la partie finale de la panne et on commande conséquemment l'application du dispositif de saisie sur la panne, respectivement l'actionnement des moyens de pincement pour serrer ou ouvrir les mors, ainsi que le déplacement relatif du corps de l'animal et des moyens de pincement.

15. Procédé selon l'une des revendications 1 à 14, **caractérisé en ce qu'**on suspend le corps de l'animal et on réalise un déplacement relatif de celui-ci et des moyens de pincement selon une direction générale verticale; plus spécialement on suspend le corps de manière que la partie terminale initiale de la panne soit inférieure et sa partie terminale finale supérieure, le déplacement relatif ,tant de sens ascendant.

16. Procédé selon la revendication 15, **caractérisé en ce qu'**on suspend le corps de l'animal dans le sens où l'emplacement de la tête est en bas et celui des pattes de derrière en haut.

17. Procédé selon l'une des revendications 1 à 16, **caractérisé en ce qu'**on met en oeuvre un corps d'animal entier, avec ou sans tête, non-fendu du coté de la colonne vertébrale; ou un corps d'animal entier, avec ou sans tête, fendu du côté de la colonne vertébrale, une étape préalable de fente étant alors prévue; ou une partie seulement du corps de l'animal, plus spécialement une moitié ou demi-carcasse, une étape préalable de fente ou découpe étant alors prévue.

18. Procédé selon l'une des revendications 1 à 17, **caractérisé, en ce qu'**on traite simultanément ou quasi simultanément les deux morceaux de panne (PA1, PA2) du corps de l'animal; on met en oeuvre un ensemble de saisie comportant deux dispositifs de saisie (12) - un pour chaque morceau de panne - ; on introduit cet ensemble dans la cage thoracique ouverte de l'animal alors que les deux dispositifs sont en position rapprochée ; on écarte ensuite mutuellement les deux dispositifs de saisie (12) pour les appliquer sur les deux morceaux de panne (PA1, PA2) respectifs.

19. Procédé selon l'une des revendications 1 à 18, **caractérisé en ce qu'**on assure un maintien d'ensemble du corps ou partie de corps à l'encontre de la poussée d'ensemble du ou des dispositifs de saisie.

20. Procédé selon l'une des revendications 1 à 19, **caractérisé en ce qu'**il comporte également une étape finale dans laquelle on pèse le corps de l'animal dépourvu de panne, respectivement la panne enlevée ; ou le corps de l'animal comprenant la panne levée mais associée à lui.

21. Procédé selon l'une des revendications 1 à 20, **caractérisé en ce qu'**on maintient substantiellement stationnaire le corps de l'animal, le procédé étant à poste fixe ; ou au contraire on déplace le corps de l'animal, le procédé pouvant alors être à poste mobile.

22. Procédé selon l'une des revendications 1 à 21, **caractérisé en ce que** pour appliquer le dispositif de saisie sur la panne et tirer sur cette dernière pour l'arracher, on déplace le dispositif de saisie comprenant les moyens de pincement; et **en ce que** ce déplacement est essentiellement un mouvement de translation.

23. Dispositif de saisie d'au moins une partie de la panne d'un animal abattu, ouvert et éviscéré, destiné notamment à faire partie d'une installation d'arrachage de panne, comportant :
- un boîtier (16) délimitant un logement interne ayant une fenêtre ouverte (18) dans une paroi (17) destinée à venir être appliqué contre la panne à arracher ;
- des moyens mécaniques de pincement (27)sous forme de mors (30,31), placés dans le logement et engagés dans la fenêtre ;
- des moyens d'actionnement (28) des moyens de pincement en vue d'ouvrir et de fermer ou serrer, les mors, respectivement les bloquer serrés
**caractérisé en ce qu'**il comporte en outre des moyens d'aspiration (29) locale de la panne, combinés aux moyens de pincement (27), aptes à conformer la panne de manière telle que les mors (30,31) la saisissent de façon ferme et appropriée; ainsi que des moyens de commande du fonctionnement des moyens d'aspiration; les mors assurant un pincement positif efficace de la panne là où elle a été préalablement conformée grâce aux moyens d'aspiration.

24. Dispositif selon la revendication 23, **caractérisé en ce que** les moyens d'aspiration comprennent la fenêtre, une partie au moins du logement interne (26) attenant à celle-ci et permettant une incurvation de la panne vers l'intérieur du boîtier, entre les mors (30,31), et un passage (44), l'ensemble étant apte à être en communication avec des moyens pour créer une dépression d'air; la fenêtre (18) formant une zone où intervient d'une part l'aspiration, d'autre part le pincement.

25. Dispositif selon l'une des revendications 23, 24,
**caractérisé en ce que** les moyens de commande des moyens d'aspiration sont associés à l'application du boîtier (16) sur la panne mors ouverts et/ou au serrage des mors, respectivement aux moyens de commande ou de détection de cette application et/ou serrage.

26. Dispositif selon l'une des revendications 23 à 25, **caractérisé, en ce que** les moyens de commande des moyens d'aspiration sont tels qu'on débute l'aspiration sensiblement au plus tard lorsqu'on commence à fermer les mors en vue de leur serrage sur la panne; et soit qu'on termine l'aspiration une fois les mors serrés, soit qu'on maintient l'aspiration effective une fois les mors serrés, les moyens d'aspiration ne participant toutefois pas à la saisie de la panne pendant son arrachage, cette saisie étant assurée par les moyens de pincement.

27. Dispositif selon l'une des revendications 23 à 26, **caractérisé en ce que** le boîtier, les mors, la fenêtre et le logement ont une forme générale allongée et profilée le long d'une direction principale.

28. Dispositif selon l'une des revendications 23 à 27, **caractérisé en ce qu'**il comporte un mors fixe (30) faisant partie du boîtier et un mors mobile (31).

29. Dispositif selon la revendication 28, **caractérisé en ce que** le mors fixe est constitué par une forme profilée renflée donnée au boîtier (18) le long d'un bord longitudinal de la fenêtre.

30. Dispositif selon l'une des revendications 28 et 29, **caractérisé en ce que** le mors mobile est constitué par une pièce profilée ayant une partie en pointe (34) -notamment tronquée- vers la fenêtre et une partie renflée (36) écartée de la fenêtre, susceptible d'être fixée à une pièce support, mobile (37), se présentant sous la forme générale d'un axe ou tourillon s'étendant parallèlement à la direction principale, monté à pivotement dans deux paliers d'extrémité, cet axe ou tourillon étant écarté de la paroi latérale (17) du boîtier (16).

31. Dispositif selon l'une des revendications 28 à 30, **caractérisé en ce que** l'extrémité, libre distale (35) du mors mobile (31) est sensiblement confondue avec la fenêtre, en tout cas ne saille pas substantiellement du boîtier.

32. Dispositif selon l'une des revendications 28 à 31, **caractérisé en ce que** les bords longitudinaux de la fenêtre (18), le mors fixe (30) et le mors mobile (31) ont des formes profilées telles que :
- en position d'ouverture des mors, le mors mobile (31) vient contre le chant du boîtier attenant au bord longitudinal de la fenêtre opposé au mors fixe; les deux mors étant alors écartés pour ménager entre eux une voie de passage pour l'air d'aspiration ;
- en position de fermeture des mors, le mors mobile vient contre le mors fixe par deux surfaces d'appui respectives.

33. Dispositif selon la revendication 32, **caractérisé en ce qu'**en position de fermeture au moins partielle des mors, un bord de la partie renflée (36) du mors mobile vient contre le chant du boîtier attenant au bord longitudinal de la fenêtre opposé au mors fixe afin de fermer, à cet endroit, la voie de passage pour l'air d'aspiration.

34. Dispositif selon l'une des revendications 23 à 33, **caractérisé en ce que** les mors sont dépourvus de griffes ou de dents acérées.

35. Dispositif selon l'une des revendications 23 à 34, **caractérisé en ce que** la grande face extérieure de la paroi du boîtier où se trouve la fenêtre a une forme profilée incurvée à concavité tournée vers l'intérieur du boîtier, au moins à l'endroit de la fenêtre.

36. Dispositif selon l'une des revendications 23 à 35, **caractérisé en ce que** les moyens d'actionnement des moyens de pincement comprennent un arbre moteur (41) porté par et logé dans le boîtier (16), écarté de sa paroi latérale, s'étendant parallèlement au mors mobile et écarté de lui, ainsi que des organes de transmission tels que des pignons dentés en prise mutuelle, interposés entre ledit arbre moteur et l'axe ou tourillon.

37. Dispositif selon l'une des revendications 23 à 36, **caractérisé en ce que** le boîtier est solidaire et prolongé par un carter (25) fermé, dans lequel est logé l'arbre (41) moteur des moyens d'actionnement des moyens de pincement, sur lequel sont montés des moyens d'entraînement dudit arbre, et dans la paroi duquel est ménagée une ouverture apte à être en communication avec les moyens pour créer une dépression d'air.

38. Dispositif selon la revendication 37, **caractérisé en ce que** le carter (25) est monté à pivotement ou blocage par rapport à une enveloppe support (46), les moyens d'aspiration comprenant sur l'enveloppe, une ouverture (49) d'amenée principale, laquelle est apte à être en communication avec les moyens pour créer une dépression d'air; des moyens d'entraînement permettant le pivotement relatif et le blocage en pivotement du carter et du boîtier qui lui est associé rigidement par rapport à l'enveloppe sur une fraction de tour telle qu'un quart ou un huitième de tour.

39. Dispositif selon l'une des revendications 23 à 38, **caractérisé en ce qu'**il comporte également des moyens de nettoyage du dispositif, plus spécialement du logement du boîtier et des mors, ces moyens de nettoyage étant, pour partie communs avec les moyens d'aspiration et comportant en outre des moyens d'amenée d'un liquide de nettoyage notamment sous pression.

40. Dispositif selon la revendication 39, **caractérisé en ce qu'**il comprend en outre des moyens de récupération du liquide de nettoyage usé.

41. Dispositif selon l'une des revendications 23 à 40, **caractérisé en ce qu'**il comporte en outre, une canne d'amenée de l'air d'aspiration et, le cas échéant, du liquide de nettoyage sous pression, cette canne comprenant deux circuits distincts pour respectivement l'air d'aspiration et le liquide de nettoyage, ces deux circuits étant terminés par deux ouvertures; la canne et l'enveloppe pouvant être déplacées de façon relative l'une par rapport à l'autre, avec blocage, de manière que l'ouverture appropriée de la canne vienne en communication avec l'ouverture d'amenée principale unique de l'enveloppe.

42. Dispositif selon la revendication 41, **caractérisé en ce qu'**il comporte en outre des moyens d'entraînement avec blocage de la canne et de l'ensemble boîtier-carter, commandés par des moyens de commande pouvant être couplés à ceux des moyens d'aspiration et/ou de nettoyage ; ces moyens d'entraînement étant notamment les mêmes que ceux de l'ensemble boîtier-carter, la canne étant alors fixe.

43. Dispositif selon l'une des revendications 23 à 42, **caractérisé en ce que**, pour pouvoir assurer l'arrachage d'une panne, il est déplacé, une fois la panne saisie, dans le sens où la panne est arrachée du corps de l'animal auquel elle est originellement associée; ce déplacement étant assuré par l'intégration du dispositif dans une installation d'arrachage de panne ou manuellement.

44. Installation pour arracher au moins une partie de la panne d'un animal abattu, ouvert et éviscéré, **caractérisée en ce qu'**elle comporte au moins un dispositif de saisie (12) selon l'une des revendications 23 à 43, ce dispositif de saisie étant support, par l'intermédiaire de l'enveloppe sur un second chariot (9) porté lui-même par un premier chariot (5) monté sur un bâti (1), l'installation comprenant en outre des moyens d'entraînement (6) du premier et du second chariot et des moyens support -plus spécialement de suspension verticale- du corps de l'animal à traiter, les moyens constitutifs de l'installation étant agencés d'une manière telle que le dispositif de saisie puisse être appliqué sur la panne à arracher dans une partie terminale initiale et être ensuite déplacé, une fois la panne saisie, vers sa partie finale pour assurer l'arrachage progressif de la panne.

45. Installation selon la revendication 44, **caractérisée en ce que** le bâti s'étend verticalement, le premier chariot (5) étant à mouvement vertical ascendant et descendant, le second chariot (9) étant à mouvement horizontal ou sensiblement horizontal, le dispositif de saisie (12) étant monté par l'enveloppe sur le second chariot à pivotement avec blocage autour d'un axe vertical et entre l'enveloppe et le carter à pivotement avec blocage autour d'un axe horizontal.

46. Installation selon l'une des revendications 44 et 45, **caractérisée en ce qu'**elle est dépourvue de contre mors.

47. Installation selon l'une des revendications 44 à 46, **caractérisée en ce qu'**elle comporte également des moyens de détection de l'emplacement de la partie terminale initiale et/ou finale de la panne à arracher.

48. Installation selon l'une des revendications 44 à 47, **caractérisée en ce qu'**elle comporte, outre les moyens support (4) du corps de l'animal ou partie de corps de l'animal à traiter, des moyens de maintien d'ensemble du corps ou partie du corps à l'encontre de la poussée du dispositif de saisie.

49. Installation selon l'une des revendications 44 à 48, **caractérisée en ce qu'**elle comporte en outre des moyens de pesée.

50. Installation selon l'une des revendications 44 à 49, **caractérisée en ce qu'**elle est soit à poste fixe, soit à poste mobile.

51. Installation selon l'une des revendications 44 à 50, **caractérisée en ce qu'**elle comporte deux dispositifs de saisie positionnés dos à dos l'un par rapport à l'autre de manière que leurs fenêtres soient dirigées vers l'extérieur, à l'opposé l'une de l'autre, cette installation étant spécialement destinée à l'arrachage des deux parties d'une panne situées de part et d'autres de l'ouverture thoracico-abdominale du corps de l'animal.

52. Installation selon la revendication 51, **caractérisée en ce que** les deux dispositifs de saisie sont situés à proximité l'un de l'autre dans un même plan horizontal et disposés au moins sensiblement symétriquement l'un par rapport à l'autre par rapport à un plan vertical transversal.

53. Installation selon l'une des revendications 51 ou 52, **caractérisée en ce que** les deux dispositifs de saisie sont entraînés en synchronisme, respectivement bloqué en rotation, autour de leurs axes de pivotement verticaux respectifs, la course de pivotement ,tant de l'ordre d'une fraction de tour entre une position rapprochée où l'ensemble des deux dispositifs de saisie peut pénétrer dans l'ouverture thoracico-abdominale du corps de l'animal à traiter et une position écartée où les deux dispositifs de saisie viennent contre les deux morceaux de panne à arracher.

## Claims

1. A method for tearing away at least part (PA 1, PA 2) of the fat (PA) of a slaughtered animal, opened up and eviscerated, in which, successively:
- at least one seizure device (12) comprising mechanical gripping means (27) is caused to be applied to an initial end part of the fat to be torn away;
- the gripping means are activated with a view to tightening the jaws (30, 31) they comprise and consequently mechanically seizing the fat in its initial end part;
- a relative movement of the body (CO) of the animal and the gripping means (27) is carried out in a general direction and sense such that the gripping means (27) go past with regard to the fat by moving away from the initial end part, and consequently the fat is pulled on and is thus progressively torn away from the body of the animal,
**characterised in that**:
- a differential air pressure is applied locally to the fat, before tightening the jaws (30, 31), with a view to shaping the fat in a way such that the jaws seize it firmly and in an appropriate manner; and
- with the jaws, an efficient positive gripping of the fat is provided in the place where it has previously been shaped by means of the suction.

2. A method according to Claim 1, **characterised in that**, in order to apply to the fat a differential air pressure capable of shaping it, it is sucked from the side where it is located by means of suction means (29); and **in that** the fat is sucked and seized mechanically in the same area.

3. A method according to one of Claims 1 or 2, **characterised in that** gripping of the folded fat is provided without cutting into either the fat, or the underlying meat.

4. A method according to one of Claims 1 to 3, **characterised in that** the start of the suction is controlled depending on the application of the gripping device (12) to the fat; and/or the end of the suction is controlled depending on the tightening of the jaws (30, 31), notably the effective seizure of the fat.

5. A method according to one of Claims 1 to 4, **characterised in that** the jaws are in an open position when the seizure device is applied to the fat; and the start of the suction is controlled substantially no later than when closure of the jaws (30, 31) is commenced with a view to tightening them on the fat.

6. A method according to one of Claims 1 to 5, **characterised in that** either the end of the suction is controlled once the jaws (30, 31) are closed or tightened on the fat, or it is kept effective once the jaws are tightened, the suction means (29) not participating in the seizure of the fat while it is being torn away, this seizure being provided by the gripping means.

7. A method according to one of Claims 1 to 5, **characterised in that** the suction is controlled in order to keep it effective once the jaws are tightened, the suction means being able to make a certain contribution to the seizure of the fat while it is being torn away, this seizure however essentially being provided by the gripping means (27).

8. A method according to one of Claims 1 to 7, **characterised in that** the fat is shaped in order to curve it with a suitable convexity turned towards the gripping means (27), in an area essentially limited to that where these gripping means are located and with a power such that the shaping of the fat is substantial; the seizure by the gripping means thus being assured of being firm and appropriate.

9. A method according to one of Claims 1 to 8, **characterised in that** the seizure device (12) - more especially the suction and gripping means - is cleaned at a time when the device has been moved away from the fat to be torn away, respectively from the body of the animal; cleaning means making use of a cleaning liquid are used, in part common with the suction means; the cleaning is carried out at a time when the suction has been stopped.

10. A method according to Claim 9, **characterised in that** the seizure device is cleaned by sending a cleaning liquid via the suction means, at that time inactive, to the gripping means and surroundings; and the used cleaning liquid is then recovered.

11. A method according to one of Claims 1 to 10, **characterised in that** it has no step consisting of acting indirectly mechanically and locally on the fat - on the opposite side thereof, notably by means of a counter-jaw.

12. A method according to one of Claims 1 to 11, **characterised in that** the relative movement of the body (CO) of the animal and the gripping means is carried out until all the fat (PA) to be torn away, from its initial part to its final part inclusive, is torn away; this movement is then continued while keeping the fat seized by the gripping means (27), until it is entirely moved away from the body of the animal; then the gripping means are activated in order to open the jaws (30, 31) and release the fat (PA).

13. A method according to one of Claims 1 to 11, **characterised in that** the relative movement of the body of the animal and the gripping means is carried out until all the fat is torn away, with the exception however of its final part, which remains connected to the body of the animal; the gripping means are next activated in order to open the jaws and release the fat; the seizure device is then moved away from the body of the animal, the torn away fat remaining connected to the body at its final part.

14. A method according to one of Claims 1 to 13, **characterised in that** the location of the initial part and/or the final part of the fat is detected and the application of the seizure device to the fat, respectively the activation of the gripping means is consequently controlled in order to tighten or open the jaws, as is the relative movement of the body of the animal and the gripping means.

15. A method according to one of Claims 1 to 14, **characterised in** tnat the body or the animal is suspended and a relative movement of this and the gripping means is carried out in a vertical general direction; more especially, the body is suspended so that the initial end part of the fat is lower and its final end part higher, the relative movement being in the upward sense.

16. A method according to Claim 15, **characterised in that** the body of the animal is suspended in the sense where the location of the head is downward and that of the hind legs upward.

17. A method according to one of Claims 1 to 16, **characterised in that** use is made of a whole animal body, with or without a head, not slit on the side of the vertebral column; or a whole animal body, with or without a head, slit on the side of the vertebral column, a prior slitting step then being provided; or solely part of the body of the animal, more especially a half or semi-carcass, a prior slitting or cutting up step then being provided.

18. A method according to one of Claims 1 to 17, **characterised in that** the two pieces of fat (PA1, PA2) of the body of the animal are dealt with simultaneously or almost simultaneously; use is made of a seizure assembly having two seizure devices (12) - one for each piece of fat -; this assembly is inserted into the open rib cage of the animal while the two devices are close together; the two seizure devices (12) are next moved away from one another in order to apply them to the two respective pieces of fat (PA1, PA2).

19. A method according to one of Claims 1 to 18, **characterised in that** an overall holding of the body or part body against the overall tnrust or the seizure device or devices is provided.

20. A method according to one of Claims 1 to 19, **characterised in that** it also has a final step in which the body of the animal devoid of fat, respectively the removed fat are weighed; or the body of the animal including the fat lifted but connected to it is weighed.

21. A method according to one of Claims 1 to 20, **characterised in that** the body of the animal is kept substantially stationary, the method being a fixed station method; or on the contrary the body of the animal is moved, the method then possibly being a movable station method.

22. A method according to one of Claims 1 to 21, **characterised in that**, in order to apply the seizure device to the fat and pull on the latter in order to tear it away, the seizure device comprising the gripping means is moved; and **in that** this movement is essentially a translational movement.

23. A device for seizing at least part of the fat of a slaughtered animal, opened up and eviscerated, designed notably to form part of an installation for tearing away fat, having:
- a case (16) delimiting an internal housing having an open window (18) in one wall (17) designed to be applied against the fat to be torn away;
- mechanical gripping means (27) in the form of jaws (30, 31), placed in the housing and fitted in the window;
- means of activating (28) the gripping means with a view to opening and closing or tigntening the jaws, respectively locking them tightened
**characterised in that** it also has means of local suction (29) of the fat, combined with the gripping means (27), capable of shaping the fat in a way such that the jaws (30, 31) seize it firmly and in an appropriate manner; and means of controlling the operation of the suction means; the jaws providing an efficient positive gripping of the fat in the place where it has previously been shaped by means of the suction means.

24. A device according to Claim 23, **characterised in that** the suction means comprise the window, part at least of the internal housing (26) adjoining said window and allowing a curvature of the fat towards the inside of the case between the jaws (30, 31), and a passage (44), the assembly being capable of being in communication with means for creating a low air pressure; the window (18) forming an area where on the one hand the suction, and on the other hand the gripping, occur.

25. A device according to one of Claims 23 or 24, **characterised in that** the means of controlling the suction means are associated with the application of the case (16) to the fat with jaws open and/or with the tightening of the jaws, respectively with the means of controlling or detecting this application and/or tightening.

26. A device according to one of Claims 23 to 25, **characterised in that** the means of controlling the suction means are such that the suction is started substantially no later than when closure of the jaws is commenced with a view to tightening them on the fat; and either the suction is terminated once the jaws are tightened, or the suction is kept effective once the jaws are tightened, the suction means not however participating in the seizure of the fat while it is being torn away, this seizure being provided by the gripping means.

27. A device according to one of Claims 23 to 26, **characterised in that** the case, jaws, window and housing have an elongated and shaped general form along a main direction.

28. A device according to one of Claims 23 to 27, **characterised in that** it has a fixed jaw (30) forming part of the case and a movable jaw (31).

29. A device according to Claim 28, **characterised in that** the fixed jaw is constituted by an enlarged shaped form given to the case (18) along one longitudinal edge of the window.

30. A device according to one of Claims 28 and 29, **characterised in that** the movable jaw is constituted by a shaped piece having a pointed part (34) - notably truncated - towards the window and an enlarged part (36) away from the window, capable of being fixed to a movable support piece (37), appearing in the general form of an axle or spindle extending parallel to the main direction, mounted able to pivot in two end bearings, this axle or spindle being separated from the lateral wall (17) of the case (16).

31. A device according to one of Claims 28 to 30, **characterised in that** the distal free end (35) of the movable jaw (31) is substantially merged with the window, and in any case does not protrude substantially from the case.

32. A device according to one of Claims 28 to 31, **characterised in that** the longitudinal edges of the window (18), the fixed jaw (30) and the movable jaw (31) have shaped forms such that:
- in the open position of the jaws, the movable jaw (31) comes against the side of the case adjoining the longitudinal edge of the window opposite the fixed jaw; the two jaws then being separated in order to make a passage way between them for the suction air;
- in the closed position of the jaws, the movable jaw comes against the fixed jaw by means of two respective bearing surfaces.

33. A device according to Claim 32, **characterised in that**, in the position of at least partial closure of the jaws, one edge of the enlarged part (36) of the movable jaw comes against the side of the case adjoining the longitudinal edge of the window opposite the fixed jaw in order to close, at this place, the passage way for the suction air.

34. A device according to one of Claims 23 to 33, **characterised in that** the jaws are devoid of claws or sharp teeth.

35. A device according to one of Claims 23 to 34, **characterised in that** the large external face of the wall of the case where the window is located has a curved shaped form with a concavity turned towards the inside of the case, at least at the location of the window.

36. A device according to one of Claims 23 to 35, **characterised in that** the means of activating the gripping means comprise a drive shaft (41) carried by and housed in the case (16), separated from its lateral wall, extending parallel to the movable jaw and separated therefrom, and transmission mechanisms such as mutually engaged toothed pinions, interposed between said drive shaft and the axle or spindle.

37. A device according to one of Claims 23 to 36, **characterised in that** the case is immovably attached to and extended by a closed casing (25), in which there is housed the drive shaft (41) for the means of activating the gripping means, on which there are mounted means of driving said shaft, and in the wall of which an opening is made capable of being in communication with the means for creating a low air pressure.

38. A device according to Claim 37, **characterised in that** the housing (25) is mounted able to pivot or be locked with respect to a support cover (46), the suction means comprising, on the cover, a main supply opening (49), which is capable of being in communication with the means for creating a low air pressure; driving means allowing the relative pivoting and the pivot-wise locking of the housing and the case which is rigidly associated therewith with respect to the cover over a fraction of a turn such as a quarter or an eighth of a turn.

39. A device according to one of Claims 23 to 38, **characterised in that** it also has means of cleaning the device, more especially the housing of the case and the jaws, these cleaning means being, in part, common with the suction means and also having means of supplying a cleaning liquid notably under pressure.

40. A device according to Claim 39, **characterised in that** it also comprises means of recovering the used cleaning liquid.

41. A device according to one of Claims 23 to 40, **characterised in that** it also has a pipe for supplying the suction air and, as applicable, the cleaning liquid under pressure, this pipe comprising two distinct circuits for respectively the suction air and the cleaning liquid, these two circuits being terminated by two openings; the pipe and the cover being able to be moved relatively with respect to one another, with locking, so that the appropriate opening of the pipe comes into communication with the single main supply opening of the cover.

42. A device according to Claim 41, **characterised in that** it also has means of driving, with locking, the pipe and the case/housing assembly, controlled by control means capable of being coupled to those of the suction and/or cleaning means; these driving means being notably the same as those of the case/housing assembly, the pipe then being fixed.

43. A device according to one of Claims 23 to 42, **characterised in that**, in order to be able to tear away fat, it is moved, once the fat has been seized, in the sense in which the fat is torn away from the body of the animal to which it was originally connected; this movement being provided by integration of the device in an installation for tearing away fat or manually.

44. An installation for tearing away at least part of the fat of a slaughtered animal, opened up and eviscerated, **characterised in that** it has at least one seizure device (12) according to one of Claims 23 to 43, this seizure device being supported by means of the cover on a second carriage (9) itself carried by a first carriage (5) mounted on a frame (1), the installation also comprising means of driving (6) the first and the second carriage and means of support - more especially or vertical suspension - of the body of the animal to be dealt with, the means constituting the installation being arranged in a way such that the seizure device can be applied to the fat to be torn away in an initial end part and then be moved, once the fat has been seized, towards its final part in order to progressively tear away the fat.

45. An installation according to Claim 44, **characterised in that** the frame extends vertically, the first carriage (5) moving vertically upwards and downwards, the second carriage (9) moving horizontally or substantially horizontally, the seizure device (12) being mounted, by means of the cover, on the second carriage able to pivot with locking around a vertical axis and between the cover and the housing able to pivot with locking around a horizontal axis.

46. An installation according to one of Claims 44 and 45, **characterised in that** it is devoid of counter-jaws.

47. An installation according to one of Claims 44 to 46, **characterised in that** it also has means of detecting the location of the initial and/or final end part of the fat to be torn away.

48. An installation according to one of Claims 44 to 47, **characterised in that**, besides the means supporting (4) the body of the animal or part body of the animal to be dealt with, it has means of overall holding of the body or part body against the thrust of the seizure device.

49. An installation according to one of Claims 44 to 48, **characterised in that** it also has weighing means.

50. An installation according to one of Claims 44 to 49, **characterised in that** it is either a fixed installation or a mobile installation.

51. An installation according to one of Claims 44 to 50, **characterised in that** it has two seizure devices positioned back to back with respect to one another so that their windows are directed outward, opposite one another, this installation being especially designed for tearing away the two parts of fat situated either side of the thoracico-abdominal opening of the body of the animal.

52. An installation according to Claim 51, **characterised in that** the two seizure devices are situated close to one another in the same horizontal plane and disposed at least substantially symmetrically with respect to one another with respect to a transverse vertical plane.

53. An installation according to one of Claims 51 or 52, **characterised in that** the two seizure devices are driven in synchronism, respectively locked rotation-wise, around their respective vertical axes of pivot, the pivot travel being of the order of a fraction of a turn between a close together position where the assembly of the two seizure devices can enter the thoracico-abdominal opening of the body of the animal to be dealt with and a separated position where the two seizure devices come against the two pieces of fat to be torn away.

## Patentansprüche

1. Verfahren zum Abreißen mindestens eines Teils (PA 1, PA 2) des Pelzes (PA) eines geschlachteten, geöffneten und ausgenommenen Tieres, bei dem man nacheinander:
- mindestens eine Greifvorrichtung (12) mit mechanischen Klemmmitteln (27) gegen ein Anfangsendteil des abzureißenden Pelzes drückt;
- die Klemmmittel betätigt, um die Backen (30, 31), die sie umfassen, zusammenzudrücken und den Pelz folglich an seinem Anfangsendteil mechanisch zu ergreifen;
- eine relative Verschiebung des Körpers (CO) des Tieres und der Klemmmittel (27) nach einer allgemeinen Richtung und einer derartigen Richtung vornimmt, dass die Klemmmittel (27) gegenüber dem Pelz verlaufen und sich dabei vom Anfangsendteil entfernen, und man folglich am Pelz zieht und ihn somit nach und nach vom Körper des Tieres abreißt,
**dadurch gekennzeichnet, dass** man
- lokal am Pelz einen Differentialluftdruck ausübt bevor man die Backen (30, 31) zusammendrückt, um den Pelz so zu formen, das ihn die Backen fest und in geeigneter Weiser ergreifen; und
- mit den Backen ein effizientes positives Einklemmen des Pelzes gewährleistet, dort wo er zuvor dank der Ansaugung geformt worden war.

2. Verfahren nach Anspruch 1, **dadurch gekennzeichnet, dass** man, um den Pelz mit einem Differentialluftdruck für seine Formgebung zu beaufschlagen, ihn auf der Seite, auf der er sich befindet, mit Ansaugmitteln (29) ansaugt; und dass man den Pelz in einer gleichen Zone ansaugt und mechanisch ergreift.

3. Verfahren nach einem der Ansprüche 1 oder 2, **dadurch gekennzeichnet, dass** man ein Einklemmen des gefalteten Pelzes gewährleistet, ohne weder den Pelz noch das darunter liegende Fleisch aufzuritzen.

4. Verfahren nach einem der Ansprüche 1 bis 3, **dadurch gekennzeichnet, dass** man das Ansaugen entsprechend dem Anbringen der Greifvorrichtung (12) am Pelz einschaltet; und/oder das Ansaugen entsprechend dem Zusammendrücken der Backen (30, 31), insbesondere dem effektiven Ergreifen des Pelzes, abschaltet.

5. Verfahren nach einem der Ansprüche 1 bis 4, **dadurch gekennzeichnet, dass** sich die Backen in geöffneter Position befinden, wenn die Greifvorrichtung am Pelz anliegt; und dass man das Ansaugen etwa spätestens dann einschaltet, wenn man beginnt, die Backen (30, 31) zu schließen, um sie auf dem Pelz zusammenzudrücken.

6. Verfahren nach einem der Ansprüche 1 bis 5, **dadurch gekennzeichnet, dass** man das Ansaugen entweder abschaltet, wenn die Backen (30, 31) auf dem Pelz geschlossen oder zusammengedrückt sind, oder dass man es nach dem Zusammendrücken der Backen aufrecht erhält, wobei die Ansaugmittel (29) nicht am Ergreifen des Pelzes während seines Abreißens beteiligt sind, wobei dieses Ergreifen durch die Klemmittel gewährleistet wird.

7. Verfahren nach einem der Ansprüche 1 bis 5, **dadurch gekennzeichnet, dass** man das Ansaugen einschaltet, um es aufrecht zu erhalten, wenn die Backen zusammengedrückt sind, wobei die Ansaugmittel einen bestimmten Beitrag zum Ergreifen des Pelzes während seines Abreißens leisten können, wobei dieses Ergreifen jedoch hauptsächlich von den Klemmmitteln (27) gewährleistet wird.

8. Verfahren nach einem der Ansprüche 1 bis 7, **dadurch gekennzeichnet, dass** man den Pelz formt, um ihn mit geeigneter Konvexität einwärts, auf die Klemmmittel (27) gerichtet zu krümmen, in einer Zone, die hauptsächlich an diejenige grenzt, in der sich diese Klemmmittel befinden, und mit einer derartigen Kraft, dass die Formung des Pelzes substantiell ist; wobei das Ergreifen durch die Klemmmittel somit fest und in geeigneter Weise erfolgt.

9. Verfahren nach einem der Ansprüche 1 bis 8, **dadurch gekennzeichnet, dass** man die Greifvorrichtung (12) - insbesondere die Ansaug- und Klemmmittel - zu einem Zeitpunkt reinigt, an dem man die Vorrichtung vom abzureißenden Pelz bzw. vom Körper des Tieres entfernt hat; dass man Reinigungsmittel mit Einsatz einer Reinigungsflüssigkeit benutzt, die einen gemeinsamen Teil mit den Ansaugmitteln aufweisen; dass man die Reinigung zu einem Zeitpunkt vornimmt, an dem man mit dem Absaugen aufhört.

10. Verfahren nach Anspruch 9, **dadurch gekennzeichnet, dass** man die Reinigung der Greifvorrichtung gewährleistet, indem man durch die dann nicht aktiven Ansaugmittel eine Reinigungsflüssigkeit zu den Klemmmitteln und in ihre Umgebung leitet; und dass man dann die schmutzige Reinigungsflüssigkeit auffängt.

11. Verfahren nach einem der Ansprüche 1 bis 10, **dadurch gekennzeichnet, dass** es keine Etappe aufweist, die darin besteht, indirekt mechanisch und lokal auf den Pelz - auf seiner Gegenseite, insbesondere mittels einer Gegenbacke, einzuwirken.

12. Verfahren nach einem der Ansprüche 1 bis 11, **dadurch gekennzeichnet, dass** man die relative Verschiebung des Körpers (CO) des Tieres und der Klemmmittel solange durchführt, bis der gesamte abzureißende Pelz (PA), von seinem Anfangsteil bis einschl. zu seinem Endteil abgerissen ist; dass man diese Verschiebung dann fortsetzt, wobei der Pelz von den Klemmmitteln (27) ergriffen bleibt, bis sie völlig vom Körper des Tieres entfernt sind; dass man dann die Klemmmittel betätigt, um die Backen (30, 31) zu öffnen und den Pelz (PA) zu befreien.

13. Verfahren nach einem der Ansprüche 1 bis 11, **dadurch gekennzeichnet, dass** man die relative Verschiebung des Körpers des Tieres und der Klemmmittel solange durchführt, bis das ganze Fell abgerissen ist, jedoch mit Ausnahme seines Endteils, der mit dem Körper des Tieres verbunden bleibt; dass man dann die Greifmittel betätigt, um die Backen zu öffnen und den Pelz zu befreien; dass man dann die Greifvorrichtung vom Körper des Tieres entfernt, wobei das abgerissene Fell an seinem Endteil mit dem Körper verbunden bleibt.

14. Verfahren nach einem der Ansprüche 1 bis 13, **dadurch gekennzeichnet, dass** man den Sitz des Anfangteils und/oder des Endteils des Pelzes detektiert und man folglich das Anbringen der Greifvorrichtung am Pelz bzw. die Betätigung der Klemmmittel zum Zusammendrücken oder Öffnen der Backen, sowie die relative Verschiebung des Tierkörpers und der Klemmmittel einschaltet.

15. Verfahren nach einem der Ansprüche 1 bis 14, **dadurch gekennzeichnet, dass** man den Tierkörper aufhängt und eine relative Verschiebung desselben und der Klemmmittel nach einer allgemeinen vertikalen Richtung durchführt; insbesondere hängt man den Körper so auf, dass sich der Anfangsteil des Pelzes unten und sein Endteil oben befinden, wobei die relative Verschiebung in aufsteigender Richtung erfolgt.

16. Verfahren nach Anspruch 15, **dadurch gekennzeichnet, dass** man den Tierkörper in der Richtung aufhängt, in der sich der Sitz des Kopfes unten und derjenige der Hinterfüße oben befindet.

17. Verfahren nach einem der Ansprüche 1 bis 16, **dadurch gekennzeichnet, dass** man einen ganzen Tierkörper, mit oder ohne Kopf, nicht gespalten auf der Seite der Wirbelsäule, bearbeitet; oder einen ganzen Tierkörper, mit oder ohne Kopf, gespalten auf der Seite der Wirbelsäule, wobei dann eine vorherige Spaltetappe vorgesehen ist; oder nur ein Teil des Tierkörpers, insbesondere eine Hälfte oder ein halbes Gerippe, wobei dann eine vorherige Spalt- oder Schneideetappe vorgesehen ist.

18. Verfahren nach einem der Ansprüche 1 bis 17, **dadurch gekennzeichnet, dass** man die beiden Pelzstücke (PA1, PA2) des Tierkörpers gleichzeitig oder quasi gleichzeitig bearbeitet; dass man eine Greifeinheit benutzt, die zwei Greifvorrichtungen (12) aufweist - eine für jedes Pelzstück -; dass man diese Einheit in den geöffneten Brustkorb des Tieres einführt, wobei sich die beiden Vorrichtungen in angenäherter Position befinden; dass man dann die beiden Greifvorrichtungen (12) voneinander entfernt, um sie gegen die beiden jeweiligen Pelzstücke (PA1, PA2) zu drücken.

19. Verfahren nach einem der Ansprüche 1 bis 18, **dadurch gekennzeichnet, dass** man einen Gesamthalt des Körpers oder Körperteils gegen den Gesamtschub der Greifvorrichtung(en) gewährleistet.

20. Verfahren nach einem der Ansprüche 1 bis 19, **dadurch gekennzeichnet, dass** es ebenfalls eine Endetappe umfasst, in der man die Körper des Tieres ohne Pelz bzw. den abgezogenen Pelz wiegt; oder wobei der Tierkörper den angehobenen aber mit ihm verbundenen Pelz umfasst.

21. Verfahren nach einem der Ansprüche 1 bis 20, **dadurch gekennzeichnet, dass** man den Tierkörper im wesentlichen unbeweglich hält, wobei das Verfahren mit festem Posten ist; oder dass man im Gegenteil den Tierkörper verschiebt, wobei das Verfahren dann mit beweglichem Posten ist.

22. Verfahren nach einem der Ansprüche 1 bis 21, **dadurch gekennzeichnet, dass** man, um die Greifvorrichtung am Pelz anzubringen und diesen zu ziehen, um ihn abzureißen, die die Klemmmittel aufweisende Greifvorrichtung verschiebt; und dass diese Verschiebung im wesentlichen eine Translationsbewegung ist.

23. Greifvorrichtung von mindestens einem Teil des Pelzes eines geschlachteten, geöffneten und ausgenommenen Tieres, die insbesondere Bestandteil einer Pelzabreißanlage sein soll, mit:
- einem Gehäuse (16), das eine interne Aufnahme abgrenzt, mit einem offenen Fenster (18) in einer Wand (17), die gegen den abzureißenden Pelz gedrückt werden soll;
- mechanischen Klemmmitteln (27) in Form von Backen (30, 31), die in der Aufnahme angeordnet und in das Fenster eingeführt sind;
- Betätigungsmittel (28) der Klemmmittel, um die Backen zu öffnen oder zu schließen oder zusammenzudrücken bzw. sie zusammengedrückt zu halten,
**dadurch gekennzeichnet, dass** sie im übrigen lokale Ansaugmittel (29) des Pelzes, kombiniert mit den Klemmmitteln (27), umfasst, die den Pelz so formen können, dass er fest und in geeigneter Weise von den Backen (30, 31) ergriffen wird; sowie Steuermittel der Funktion der Ansaugmittel; wobei die Backen ein effizientes positives Einklemmen des Pelzes dort gewährleisten, wo er zuvor durch die Ansaugmittel geformt worden war.

24. Vorrichtung nach Anspruch 23, **dadurch gekennzeichnet, dass** die Ansaugmittel das Fenster umfassen, wobei mindestens ein Teil der internen Aufnahme (26) an dieses angrenzen, und eine Einwärtsbiegung des Pelzes in das Gehäuse hinein, zwischen den Backen (30, 31) ermöglichen, und einen Durchgang (44), wobei die Baugruppe mit Mitteln in Verbindung stehen kann, um einen Luftunterdruck herzustellen; wobei das Fenster (18) eine Zone bildet, in der einerseits das Ansaugen und andererseits das Einklemmen stattfinden.

25. Vorrichtung nach einem der Ansprüche 23, 24, **dadurch gekennzeichnet, dass** die Steuermittel der Ansaugmittel bei geöffneten Backen und/oder beim Zusammendrücken der Backen mit dem Anbringen des Gehäuses (16) am Pelz verbunden sind bzw. mit den Steuer- oder Detektierungsmitteln dieses Anbringens und/oder Zusammendrückens.

26. Vorrichtung nach einem der Ansprüche 23 bis 25, **dadurch gekennzeichnet, dass** die Steuermittel der Ansaugmittel so beschaffen sind, dass man das Ansaugen etwa spätestens dann beginnt, wenn man mit dem Schließen der Backen beginnt, um sie auf dem Pelz zusammenzudrücken; und dass man das Ansaugen entweder beendet, wenn die Backen zusammengedrückt sind, oder man erhält das Ansaugen nach dem Zusammendrücken der Backen aufrecht, wobei die Ansaugmittel jedoch nicht am Ergreifen des Pelzes während seinem Abreißen beteiligt sind, wobei dieses Ergreifen durch die Klemmmittel gewährleistet wird.

27. Vorrichtung nach einem der Ansprüche 23 bis 26, **dadurch gekennzeichnet, dass** das Gehäuse, die Backen, das Fenster und die Aufnahme eine im allgemeinen längliche und profilierte Form entlang einer Hauptrichtung aufweisen.

28. Vorrichtung nach einem der Ansprüche 23 bis 27, **dadurch gekennzeichnet, dass** sie eine feste Backe (30), die ein Bestandteil des Gehäuses ist, und eine mobile Backe (31) aufweist.

29. Vorrichtung nach Anspruch 28, **dadurch gekennzeichnet, dass** die feste Backe aus einer profilierten, bauchigen, dem Gehäuse (18) entlang einer Längskante des Fensters verliehenen Form besteht.

30. Vorrichtung nach einem der Ansprüche 28 und 29, **dadurch gekennzeichnet, dass** die mobile Backe aus einem profilierten Teil mit einer - insbesondere abgestumpften - Zuspitzung (34) in Richtung des Fensters und aus einer dem Fenster abgewandten Ausbauchung (36) besteht, die an einem mobilen Trägerteil (37) befestigt werden kann, der eine allgemeine Form einer sich parallel zur Hauptrichtung erstreckenden, drehbar in zwei Endlagern montierten Achse oder eines Drehzapiens aufweist, wobei diese Achse oder dieser Drehzapfen von der Seitenwand (17) des Gehäuses (16) entfernt ist.

31. Vorrichtung nach einem der Ansprüche 28 bis 30, **dadurch gekennzeichnet, dass** das freie distale Ende (35) der mobilen Backe (31) sich etwa mit dem Fenster deckt, jedenfalls nicht nennenswert aus dem Gehäuse herausragt.

32. Vorrichtung nach einem der Ansprüche 28 bis 31, **dadurch gekennzeichnet, dass** die Längskanten des Fensters (18), die feste Backe (30) und die mobile Backe (31) profilierte Formen aufweisen wie beispielsweise:
- in geöffneter Position der Backen befindet sich die mobile Backe (31) an der Kante des Gehäuses, die an die der festen Backe gegenüberliegenden Längskante des Fensters angrenzt; wobei die beiden Backen dann entfernt sind, um zwischen ihnen einen Durchgangskanal für die Ansaugluft zu bilden;
- in geschlossener Position der Backen befindet sich die mobile Backe mit zwei jeweiligen Stützflächen an der festen Backe.

33. Vorrichtung nach Anspruch 32, **dadurch gekennzeichnet, dass** sich in zumindest teilweise geschlossener Position der Backen eine Kante der Ausbauchung (36) der mobilen Backe an der an die Längskante des der festen Backe gegenüberliegenden Fensters angrenzenden Kante des Gehäuses befindet, um an dieser Stelle den Durchgangsweg für die Ansaugluft zu schließen.

34. Vorrichtung nach einem der Ansprüche 23 bis 33, **dadurch gekennzeichnet, dass** die Backen keine spitzen Klauen oder Zähne aufweisen.

35. Vorrichtung nach einem der Ansprüche 23 bis 34, **dadurch gekennzeichnet, dass** die große Außenseite der Wand des Gehäuses, an der sich das Fenster befindet, eine einwärts in das Gehäuse gerichtete profilierte Form aufweist, zumindest an der Stelle des Fensters.

36. Vorrichtung nach einem der Ansprüche 23 bis 35, **dadurch gekennzeichnet, dass** die Betätigungsmittel der Klemmmittel eine von dem Gehäuse (16) getragene und in diesem angeordnete, von seiner Seitenwand entfernte Antriebswelle (41) umfassen, die sich parallel zur mobilen Backe erstreckt und von ihr entfernt ist, sowie Transmissionsorgane wie ineinander eingreifende Zahnräder, die zwischen der besagten Antriebswelle und der Achse bzw. dem Drehzapfen angeordnet sind.

37. Vorrichtung nach einem der Ansprüche 23 bis 36, **dadurch gekennzeichnet, dass** das Gehäuse Bestandteil eines geschlossenen Kastens (25) ist und von diesem verlängert wird, in dem eine Antriebswelle (41) der Betätigungsmittel der Klemmmittel gelagert ist, auf dem Antriebsmittel der besagten Welle montiert sind, und in dessen Wand eine Öffnung vorgesehen ist, die mit den Mitteln in Verbindung stehen kann, um einen Luftunterdruck herzustellen.

38. Vorrichtung nach Anspruch 37, **dadurch gekennzeichnet, dass** der Kasten (25) in bezug auf einen Tragmantel (46) drehend oder blockiert montiert ist, wobei die Ansaugmittel am Mantel eine Hauptzuleitungsöffnung (49) umfassen, die mit den Mitteln in Verbindung stehen kann, um einen Luftunterdruck herzustellen; wobei Antriebsmittel das relative Drehen und das Blockieren des Drehens des Kastens und des Gehäuses ermöglichen, das in Bezug auf den Mantel uber einen Teil der Drehung, wie eine Viertel- oder eine Achteldrehung, fest mit ihm verbunden ist.

39. Vorrichtung nach einem der Ansprüche 23 bis 38,
**dadurch gekennzeichnet, dass** sie ebenfalls Reinigungsmittel der Vorrichtung umfasst, insbesondere der Aufnahme des Gehäuses und der Backen, wobei diese Reinigungsmittel zum Teil gemeinsam mit den Ansaugmitteln sind, und im übrigen Zuleitungsmittel einer Reinigungsflüssigkeit, insbesondere unter Druck, umfassen.

40. Vorrichtung nach Anspruch 39, **dadurch gekennzeichnet, dass** sie im übrigen Auffangmittel der schmutzigen Reinigungsflüssigkeit umfasst.

41. Vorrichtung nach einem der Ansprüche 23 bis 40, **dadurch gekennzeichnet, dass** sie im übrigen ein Zuleitungsrohr für die Ansaugluft und gegebenenfalls für die unter Druck stehende Reinigungsflüssigkeit umfasst, wobei dieses Rohr zwei verschiedene Kreisläufe jeweils für die Ansaugluft und für die Reinigungsflüssigkeit aufweist, wobei diese Kreisläufe mit zwei Öffnungen enden; wobei das Rohr und der Mantel relativ zueinander mit Blockierung verschoben werden können, so dass die geeignete Öffnung des Rohrs mit der einzigen Hauptzuleitungsöffnung des Mantels in Verbindung gesetzt wird.

42. Vorrichtung nach Anspruch 41, **dadurch gekennzeichnet, dass** sie im übrigen Antriebsmittel mit Blockierung des Rohrs und der Gehäuse-/Kasten-Baugruppe umfasst, die von Steuermitteln gesteuert werden, die an diejenigen der Ansaug-und/oder Reinigungsmittel angekuppelt werden können; wobei diese Antriebsmittel insbesondere die gleichen sind wie diejenigen der Gehäuse-/Kasten-Baugruppe, wobei das Rohr dann unbeweglich ist.

43. Vorrichtung nach einem der Ansprüche 23 bis 42, **dadurch gekennzeichnet, dass** sie, um das Abreißen des Pelzes gewährleisten zu können und sobald der Pelz ergriffen wurde, in die Richtung verschoben wird, in der der Pelz vom Tierkörper abgerissen wird, mit dem er ursprünglich verbunden ist; wobei diese Verschiebung durch die Integration der Vorrichtung in eine Pelzabreißanlage oder manuell gewährleistet wird.

44. Anlage zum Abreißen von zumindest einem Teil des Pelzes eines geschlachteten, geöffneten und ausgenommenen Tieres, **dadurch gekennzeichnet, dass** sie mindestens eine Greifvorrichtung (12) nach einem der Ansprüche 23 bis 43 umfasst, wobei diese Greifvorrichtung über den Mantel auf einem zweiten Schlitten (9) getragen wird, der seinerseits von einem ersten, auf einem Gestell (1) montierten Schlitten (5) getragen wird, wobei die Anlage im übrigen Antriebsmittel (6) des ersten und des zweiten Schlittens und Tragmittel - insbesondere für die vertikale Aufhängung - des zu bearbeitenden Tierkörpers umfasst, wobei die Bestanteile der Anlage so angeordnet sind, dass die Greifvorrichtung an einem Anfangsendteil gegen den abzureißenden Pelz gedrückt werden und dann, wenn der Pelz ergriffen wurde, zu seinem Endteil hin verschoben werden kann, um das progressive Abreißen des Pelzes zu gewährleisten.

45. Anlage nach Anspruch 44, **dadurch gekennzeichnet, dass** sich das Gestell vertikal erstreckt, wobei sich der erste Schlitten (5) vertikal nach oben und nach unten bewegt, wobei sich der zweite Schlitten (9) horizontal oder etwa horizontal bewegt, wobei die Greifvorrichtung (12) am Mantel auf dem zweiten Schlitten um eine vertikale Achse herum drehbar mit Blockierung und zwischen dem Mantel und dem Kasten um eine horizontale Achse herum drehbar mit Blockierung montiert ist.

46. Anlage nach einem der Ansprüche 44 und 45, **dadurch gekennzeichnet, dass** sie keine Gegenbacken aufweist.

47. Anlage nach einem der Ansprüche 44 bis 46, **dadurch gekennzeichnet, dass** sie ebenfalls Detektierungsmittel des Sitzes des Anfangs- und/oder Endteils des abzureißenden Pelzes umfasst.

48. Anlage nach einem der Ansprüche 44 bis 47, **dadurch gekennzeichnet, dass** sie außer den Tragmitteln (4) des zu bearbeitenden Tierkörpers oder eines Teils davon Festhaltmittel des gesamten Körpers oder eines Teils davon gegen den Schub der Greifvorrichtung umfasst.

49. Anlage nach einem der Ansprüche 44 bis 48, **dadurch gekennzeichnet, dass** sie im übrigen Wiegemittel umfasst.

50. Anlage nach einem der Ansprüche 44 bis 49, **dadurch gekennzeichnet, dass** sie entweder mit festen Posten ist, oder sie ist mit beweglichen Posten.

51. Anlage nach einem der Ansprüche 44 bis 50, **dadurch gekennzeichnet, dass** sie zwei Greifvorrichtungen umfasst, die Rücken an Rücken angeordnet sind, so dass ihre Fenster gegenüberliegend nach außen gerichtet sind, wobei diese Anlage speziell zum Abreißen der beiden Teile eines Pelzes bestimmt ist, die sich auf beiden Seiten der Brustkorb-Bauch-Öffnung des Tierkörpers befinden.

52. Anlage nach Anspruch 51, **dadurch gekennzeichnet, dass** sich die beiden Greifvorrichtungen nah beieinander auf einer gleichen horizontalen Ebene befinden und mindestens etwa symmetrisch zueinander in bezug auf eine vertikale Querebene angeordnet sind.

53. Anlage nach einem der Ansprüche 51 oder 52, **dadurch gekennzeichnet, dass** die beiden Greifvorrichtungen synchronisiert, jeweils rotationsblockiert, um ihre jeweiligen Drehachsen herum angetrieben werden, wobei der Drehweg etwa einer Drehungsfraktion zwischen einer angenäherten Position, in der die Baugruppe der beiden Greifvorrichtungen in die Brustkorb-Bauch-Öffnung des zu behandelnden Tierkörpers eindringen kann, und einer entfernten Position, in der die beiden Greifvorrichtungen gegen die beiden abzureißenden Pelzstücke drücken, entspricht.
